(19) Europäisches Patentamt
European Patent Office
Office européen des brevets

(11) **EP 1 776 176 B1**

(12) **EUROPEAN PATENT SPECIFICATION**

(45) Date of publication and mention
of the grant of the patent:
**16.09.2015 Bulletin 2015/38**

(51) Int Cl.:
**B01D 71/06** (2006.01)   **C08J 5/00** (2006.01)
**B01D 69/12** (2006.01)   **B01D 61/00** (2006.01)

(21) Application number: **05774549.9**

(22) Date of filing: **12.08.2005**

(86) International application number:
**PCT/CA2005/001248**

(87) International publication number:
**WO 2006/015495 (16.02.2006 Gazette 2006/07)**

(54) **PROCESS FOR PREPARING A FILTRATION MEMBRANE COMPRISING A NON-CROSSLINKED GEL POLYMER**

HERSTELLUNGSVERFAHREN FÜR EINE FILTRATIONSMEMBRAN ENTHALTEND EIN NICHTVERNETZTES GELPOLYMER

PROCEDE DE PREPARATION D'UNE MEMBRANE DE FILTRATION COMPRENANT UN POLYMERE GEL NON RETICULE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.08.2004   US 601119 P**

(43) Date of publication of application:
**25.04.2007   Bulletin 2007/17**

(73) Proprietor: **McMASTER UNIVERSITY**
**Hamilton,**
**Ontario L8S 4L8 (CA)**

(72) Inventors:
• **CHILDS, Ronald, F.**
**British Columbia V9K 1L4 (CA)**
• **KOMKOVA, Elena, N.**
**Hamilton, Ontario L8S 4P4 (CA)**
• **ZHOU, Jinsheng**
**Hamilton, Ontario K8S 1G8 (CA)**
• **MIKA, Alicja, M.**
**Hamilton, Ontario L8S 4E3 (CA)**
• **DEY, Tapan, K.**
**Anushaktinagar, Mumbai - 400094 (IN)**

(74) Representative: **Potter Clarkson LLP**
**The Belgrave Centre**
**Talbot Street**
**Nottingham, NG1 5GG (GB)**

(56) References cited:
**EP-A1- 0 651 455       EP-A2- 0 288 310**
**EP-A2- 0 798 791       CA-A1- 2 454 323**
**JP-A- H05 310 990     US-A- 4 335 017**
**US-A- 4 515 906       US-A- 5 084 173**

## Description

CROSS-REFERENCE TO RELATED APPLICATIONS

FIELD OF THE INVENTION

This invention relates to a process for the preparation of a composite material comprising a non-crosslinked gel polymer.

BACKGROUND OF THE INVENTION

It is known that reducing the hydrophobicity of a microfiltration or ultrafiltration membrane is advantageous, as it reduces its fouling tendencies. This naturally leads to a problem, as the least expensive and most stable membrane forming materials (support members) are polymers that are quite hydrophobic. There is also advantage in making a membrane that is hydrophilic and therefore easily wettable with water, as this makes use of the membrane simpler and obviates the need for wetting solvents.

To decrease the hydrophobicity inherent to most polymeric membrane materials, it is known to chemically modify the surface and pore-walls of a support member or, alternatively, to coat the walls of the pores in the support with a hydrophilic layer, the layer usually being polymeric in nature. The coated hydrophilic layer improves the affinity of the composite material towards water, increasing its wettability and, in some cases, making the membrane completely wettable by water.

Early efforts in the art to adhere the hydrophilic layer to the support included activating the walls of the pores in the support (for example with a plasma treatment) such that the coating is chemically attached to the pore-walls [Nystrom M. et al., Journal of Membrane Science. 60(1991)275-296]. These coatings could also be made by polymerizing a mixture of monomers within the substrate to be coated under conditions such that the thus formed polymer is covalently grafted to the walls of the substrate. Under certain conditions where there is no cross-linking or low degrees of cross-linking of hydrophilic and particularly charged grafted polymers, the grafted layer can become hydrated and expand in thickness to essentially fill the pores of the substrate. Such composite materials were found to be very hydrophilic and readily wet with water.

A further advance in the art was made when it was discovered that formation of a cross-linked polymer within a support by cross-linking a polymer, or by forming a crosslinked polymer network by polymerizing a mixture of monomers, would permit the crosslinked polymer to be retained within the pores of a support [see for example US 6,258,276 to Mika et al.] This was surprising as it was thought that merely crosslinking a polymer within the pores of a composite material would not be sufficient to prevent the polymer from being washed away during use. Examples of both pore-coated and gel-filled composite materials, where there is no bonding interaction of the incorporated crosslinked polymer with the pore-walls, are known. A further development was made when it was discovered that coated membranes could be prepared by applying to a porous matrix a polymer solution in an organic solvent or a mixture of an organic solvent and water, and to then dry the matrix to remove the organic solvent or the solvent/water mixture (see for example JP 2002233739, U.S. 5,084, 173 or EP 0 498 414).

US 4,515,906 describes ion exchange hollow fibre membranes which pores are filled with a gel polymer. The hollow fibre membranes have an asymmetric pore distribution with the smallest pores on the exterior surfaces of the fibre, therefore retaining the gel in the pores.

US 4,335,017 discloses the process of depositing gel polymer in pores of supports in particulate, e.g. beads form, used in chromatography columns.

BRIEF SUMMARY OF THE INVENTION

It is possible to durably coat or fill the pores of a support member with a non-crosslinked gel polymer to obtain a composite material with good wetting properties.

In one aspect, the present disclosure provides a composite material comprising a support member that has a plurality of pores extending therethrough, which pores are durably filled or coated with a non-crosslinked gel polymer.

The present invention provides a process for preparing a filtration membrane as described herein, the process comprising:

(a) applying to a porous support member a solution comprising a first solvent and a non-crosslinked polymer that is substantially soluble in said first solvent, the first solvent being miscible in a second solvent in which second solvent the polymer is substantially insoluble but swellable, such that the polymer enters the pores of the support member; and

(b) contacting said polymer with said second solvent to precipitate said polymer from said solution to form a gel polymer that durably fills or coats the pores of the support member.

The present disclosure provides a method for removing a material from an aqueous solution comprising passing a material-containing aqueous solution through a composite material as described herein.

A filtering apparatus comprising a composite material is described herein.

By "non-crosslinked gel polymer" is meant that there are no covalent bonds between different strands of the polymer. In order to be considered a gelling polymer, a polymer must, for a specific liquid, be substantially insoluble but swellable. By "substantially insoluble but swellable" is meant that the polymer which forms the gel polymer is poorly soluble in the specific liquid, while still retaining enough solubility to display an increased volume when contacted with the liquid.

By "durably filled or coated" is meant that the gel polymer that coats or fills the pores of the support member is substantially retained within the pores when a liquid, in which liquid the gel polymer is substantially insoluble but swellable, is passed through the composite material.

In the case where the gel polymer "coats" the pores of the support member, it is meant that the void volume within the pores of the support member is not fully occupied by the gel, and that a liquid passing through the composite material will flow in proximity of the gel but not necessarily through the gel, although some liquid may pass through the gel.

In the case where the gel polymer "fills" the pores of the support member, it is meant that, in use, essentially all liquid that passes through the composite material must pass through the solvent swollen gel polymer phase. A support member whose pores contain gel polymer to such an amount that this condition is satisfied is regarded as filled. Provided that the condition is met that the liquid passes through the gel polymer, it is not necessary that the void volume of the support member be completely occupied by the solvent swollen gel polymer.

The expression "precipitate to form a gel" refers to the process by which polymer constituting the dispersed (discontinuous) phase in a polymer solution inverts into a continuous phase of a swollen macromolecular network or gel.

BRIEF DESCRIPTION OF THE DRAWINGS

Embodiments of the invention will be discussed with reference to the following Figures:

Figure 1 shows a picture of an experimental cell utilised to test composite materials comprising hollow fibres as support materials.

Figure 2 displays an ESEM image of a pore-filled composite material comprising a sulfonated poly(2,6-phenylene-p-oxide)(SPPO) gel polymer.

Figure 3 displays an EDX analysis of sulphur in the cross-section of a composite material comprising a sulfonated poly(2,6-phenylene-p-oxide)(SPPO) gel polymer.

Figure 4 displays a fluorescence confocal micrograph of a composite material comprising a sulfonated poly(2,6-phenylene-p-oxide) (SPPO) gel polymer.

Figure 5 graphs the relationship between flux and salt rejections (300 ppm NaCl, 300 ppm $Na_2SO_4$ and 300 ppm $MgCl_2$) for a composite material comprising a sulfonated poly(2,6-phenylene-p-oxide)(SPPO) gel polymer.

Figure 6 graphs the relationship between flux and salt rejections for a composite material comprising a sulfonated poly(2,6-phenylene-p-oxide)(SPPO) gel polymer. Figure 6A displays the rejection results for the cations $Ca^{2+}$, $Mg^{2+}$, $K^+$ and $Na^+$, while figure 6B displays the rejection results for the anions $SO_4^{2-}$, $Cl^-$, $F^-$ and $NO_3^-$.

Figure 7 graphs the stability over time of a composite material comprising a sulfonated poly(2,6-phenylene-p-oxide)(SPPO) gel polymer, where the composite material has been subjected to 1) no treatment, 2) a 0.01N NaOH solution for 15 hours, 3) a 0.1N NaOH solution for 15 hours, 4) a 1.0N NaOH solution for 15 hours, 5) a 0.01N HCl solution for 15 hours, 6) both a base and acid treatment.

Figure 8 graphs the results for the separation of humic acid using a composite material comprising a sulfonated poly(ether-ether-ketone)(SPEEK) gel polymer.

Figure 9 graphs a plot of the concentration of lysozyme in permeate passing through a composite material containing a sulfonated poly(ether-ether-ketone) gel polymer versus the volume of permeate.

Figure 10 graphs water flux through the composite material containing an AMPS/NtBAm co-gel polymer as a function of applied pressure.

Figure 11 graphs water flux as a function of pressure for a composite material comprising a precipitated GMA/NVF/Nt-BAm gel copolymer.

Figure 12 graphs the theoretical effect of coating layer thickness on flux at 100kPa.

Figure 13 graphs the effect of EVAL concentration on flux at 100kPa.

Figure 14 graphs the theoretical effect of mass gain on coating layer thickness.

Figure 15 graphs the permeability of EVAL containing composite materials at different polymer volume fractions.

Figure 16 graphs the permeability of EVAL 27, EVAL32 and EVAL 44 containing composite materials at different polymer volume fractions.

Figure 17 graphs the permeability of SPEEK containing composite materials at different polymer volume fractions.

Figure 18 shows a representation of an apparatus used to carry out critical flux measurements.

Figure 19 displays a confocal micrograph of a cross-section of an asymmetrically filled composite material comprising a sulfonated poly(ether-ether-ketone) gel.

Figure 20 displays ESEM images of EVAL gel polymer films prepared by (A) precipitation and (B) evaporation.

Figure 21 displays ESEM images of a pore-coated composite material comprising an EVAL gel polymer which was prepared by (A) precipitation and (B) evaporation.

## DETAILED DESCRIPTION OF THE INVENTION

*Composition of the Gel polymer*

Gels are typically obtained by polymerization of a monomer and a polyfunctional compound (a cross-linker), or by crosslinking a crosslinkable polymer, in a solvent which is a good solvent for the formed polymer network and which swells the polymer network.

In the present case, the need for covalent crosslinking is circumvented by using a gel forming polymer, where the required polymer-polymer interactions are achieved through weaker interactions, such as hydrogen bonding or Van der Waals interactions. What is surprising from this system is that the gel prepared remains stable, even when subjected to flow of liquid through the gel or adjacent to the gel.

While there are a large number of different polymer/solvent systems that fall within the scope of the present invention, examples include those systems where the polymer, when non-crosslinked, is soluble in an organic solvent which is miscible with water, but substantially insoluble but swellable in water. Other examples include those systems where the non-crosslinked polymer is soluble in water, but substantially insoluble but swellable in an organic solvent that is miscible with water, and those systems where the non-crosslinked polymer is soluble in a polar solvent, but substantially insoluble in the same or a different polar solvent which has a different pH.

Without being bound by any particular theory, it is believed that because of its insolubility in a liquid that is passed through the composite material, the weak interactions between the polymer strands, and because it is entangled within the pores of the support member, the gel is entrapped within the support member. By entrapped is meant that the gel polymer is held within the support member without being covalently bonded to it.

The non-crosslinked nature of the gel polymer permits use of preparation processes that are very simple, that avoid the use of additional chemicals such as crosslinking agents and initiators, and also permits use of certain polymers that do not easily lend themselves to crosslinking. Important examples of such polymers include derivatives of so-called "engineering polymers", which polymers display high chemical stability. Examples of such derivatized polymers include partially sulfonated polysulfone, poly(2,6-dimethyl-p-phenylene oxide), poly(etherether-ketone), and poly(ether sulfone).

The gel forming polymer preferably has a molecular weight of from about 5,000 to about 5,000,000 g/mol, preferably of from about 40,000 to about 1,000,000 g/mol and more preferably about 40,000 to about 150,000 g/mol. However, these ranges for molecular weight of the gel polymer are not meant to be limiting, as the molecular weight will be dictated by the nature of the support member, the nature of the gel polymer and the nature of the solvent being passed through the composite material. As long as the gel polymer meets the requirement that it be substantially insoluble but swellable in a solvent being passed through the composite material, it is to be considered part of the present invention. Preferably, the gel polymer is homogeneous or microheterogeneous.

The thickness of the coating layer formed by the gel polymer can be regulated by controlling the amount and nature of the incorporated, non-cross-linked polymer. If the amount of gel polymer is increased past a certain level, the gel completely fills the pores of the support member to form a pore-filled composite material. There is a continuum of thicknesses that can be achieved, going from thin gel-coated composite materials to pore-filled composite materials.

The relative balance between insolubility and swellability of the gel polymer can be measured through a three-dimensional cohesion parameter, $\delta_t$, which is a relationship between solvent and polymer properties (Rabelo, D.; Coutinho, F. M. B. Polym. Bull. (1994), 33, 479.; Rabelo, D.; Coutinho, F. M. B. Polym. Bull. (1994), 33, 487.; Rabelo, D.; Coutinho, F. M. B. Polym. Bull. (1994), 33, 493). The three-dimensional cohesion parameter considers the contributions from dispersive, $\delta_d$, dipolar, $\delta_p$, and hydrogen bonding, $\delta_h$, interactions, according to equation:

$$\delta_t^2 = \delta_d^2 + \delta_p^2 + \delta_h^2$$

In a three-dimensional diagram the solvent and polymer can be represented by two points, and the solvent-polymer affinity can be described by the distance do between these two points (Rabelo, D.; Coutinho, F. M. B. Polym. Bull. (1994), 33, 479) :

$$d_0^2 = 4\left(\delta_{d1} - \delta_{d2}\right)^2 + \left(\delta_{p1} - \delta_{p2}\right)^2 + \left(\delta_{h1} - \delta_{h2}\right)^2$$

The indices 1 and 2 represent the solvent and polymer, respectively.

Many of the cohesion parameters are tabulated in the literature (Barton A. F. M. in CRC Handbook of Solubility Parameters and Other Cohesion Parameters, CRC Press: Boca Raton, FL, 1983, Chapter 14). Those parameters that are not available can be estimated using a group contribution method according to Hoftyzer-Van Krevelen and Hoy (Grulke, E. A. In Polymer Handbook, 4th ed.; Brandrup, J.,Immergut E. H., Grulke, E. A., Eds.; Wiley-Interscience: New York, 1999; Chapter VII, p 675.; Van Krevelen. D. W. In Properties of Polymers, 2nd ed.; Elsevier: New York, 1976; Chapter 7, p 129). In case of multifunctional polymers, the average cohesion parameters of n contributing groups can be calculated according to the following equation (Rabelo, D.; Coutinho, F. M. B. Polym. Bull. (1994), 33, 487):

$$\bar{\delta}_i = \phi_1 \delta_{1i} + \phi_2 \delta_{2i} + ...\phi_n \delta_{ni}$$

whereas $\phi$ represents the volume fractions, and the index i, the type of dispersive interaction (d, p, and h).

The literature (Rabelo, D.; Coutinho, F. M. B. Polym. Bull. (1994), 33, 479) defines good solvents with do < 10.0, intermediate solvents with 10.0 < $d_0$ < 12.7, and poor solvents with $d_0$ > 12.7.

For gel polymers that are water insoluble but water swellable, the affinity between the gel polymer and water is depicted by the symbol $d_0(H_2O)$, which represents an affinity parameter, as described above, where the solvent is water. Preferably, gel polymers that are water insoluble but water swellable have a $d_0(H_2O)$ value of from about 12 to about 40 MPa$^{1/2}$, and more preferably, from about 12 to about 25 MPa$^{1/2}$. Similarly, gel polymers that are insoluble but swellable in a particular organic solvent can have, for example, an affinity parameter ($d_0$) of from 12 to 40 MPa$^{1/2}$ for that solvent.

For water insoluble but water swellable gel-forming polymers, the balance between water-insolubility and water swellability of the gel polymer can be achieved in various polymers by choosing appropriate monomers or co-monomers. In some instances, the sought after balance is achieved by using one or more monomers (co-momoners) which have a weak interaction with water, such as neutral monomers that have strong dipole moments or an ability to form hydrogen bonds. Neutral monomers bearing amide or alcohol groups fall within this category. In other instances, a co-monomer having a hydrophobic character can be combined with a hydrophilic monomer, such as a charged monomer, to obtain a polymer that achieves the required balance of water insolubility and water swellability.

Examples of gel polymers include cellulose derivatives such as cellulose acetate, cellulose acetate butyrate, cellulose acetate propionate, 2-hydroxyethyl cellulose and ethyl cellulose. Further examples of gel polymers include polyesters such as poly(ethylene adipate), polyethylene glycol terephthalate, poly(L-lactide), poly(DL-lactide) and poly(DL-lactide-co-glycolide), polyamides such as poly(hexamethyleneadipamide) (Nylon 6/6) and poly(hexamethylenesebacamide) (Nylon 6/10), polyacrylates such as poly(2-hydroxyethyl methacrylate) and poly(2-hydroxypropyl methacrylate), poly(ethylene-co-vinyl alcohol) (EVAL) (which can have, for example, an ethylene content of from about 27 to about 44 mol-%), poly(ethylene-co-allyl alcohol), polyhydroxystyrene (poly(4-vinylphenol), and poly(vinyl alcohol) 40% hydrolyzed (Mowiol 40-88). Still further examples of gel polymers include water-insoluble, partially charged polymers such as sulfonated poly(ether-ether-ketone) (S-PEEK, <86% sulfonation), sulfonated poly(phenylene oxide) (S-PPO, <70% sulfonation) (e.g. sulfonated poly(2,6-phenylene-p-oxide), sulfonated polysulfone (S-PS; <70% sulfonation), sulfonated poly(ether sulfone) (SPES; <70% sulfonation), sulfonated polystyrene (SPSt; <70% sulfonation), aminated polysulfone (<70% amination), aminated poly(phenylene oxide) (Q-PPO; <70% amination), aminated poly(vinylbenzyl chloride) (APVB; <70% amination), partially protonated or alkylated poly(4-vintlpyridine) (Q-P4VP; <30% protonation or alkylation), copolymers of neutral and charged monomers, and random copolymers of hydrophilic and hydrophobic monomers.

The water-insolubility/water swellability balance of certain cellulose derivatives, such as cellulose acetate, can be controlled through the degree of acetylation of the polymer. In some instances, a degree of acetylation of from about 29 to about 61 wt-% is preferred. Similarly, the water-insolubility/water swellability balance of other polymers is controlled by adjusting the amount of sulfonation or amination in the polymer. The amount of amination of a polymer is dependent on the number of quaternized amine groups in the polymer.

The random copolymers of hydrophilic and hydrophobic monomers can be prepared, for example, by radical polymerization of one or more hydrophobic monomers with one or more hydrophilic monomers.

Examples of hydrophobic monomers include n-hexyl acrylate, n-heptyl methacrylate, 1-hexadecyl methacrylate, methyl methacrylate, styrene, 2, 3, or 4-methylstyrene, n-myristyl acrylate,N-tert-butylacrylamide, N-(n-octadecyl)acrylamide, N-tert-octylacrylamide, n-octyl methacrylate, n-propyl acrylate, iso-propyl methacrylate, n-propyl methacrylate, stearyl acrylate, 3,3,5-trimethylcyclohexyl methacrylate, undecyl acrylate, undecyl methacrylate, vinyl butyrate, vinyl laurate, vinyl octadecylether, vinyl iso-octyl ether, vinyl stearate, tert-amyl methacrylate, N-benzylmethacrylamide, iso,sec, tert or n-butyl(meth)acrylate, N-cyclohexylacrylamide, cyclohexyl (meth)acrylate, n- or iso-decyl (meth)acrylate, di(n-butyl) itaconate, N-diphenylmethylacrylamide, N-dodecylmethacrylamide, n-dodecyl methacrylate, 2-ethylbutyl methacrylate, 2-ethylhexyl acrylate, N-ethylmethacrylamide, isooctyl acrylate, isotridecylacrylate, and isobornyl acrylate.

Examples of hydrophilic monomers include:

a) negatively charged monomers, such as 2-acrylamido-2-methylpropanesulfonic acid, sodium sulfnonate, vinylsulfonic acid,acrylamidoglycolic acid, methacrylic acid, acrylic acid, itaconic acid, 2-propene-s-sulfonic acid, sodium acrylate, 2-sulfonethyl methacrylate, 3-sulfopropyl acrylate, 3-sulfopropyl methacrylate, vinylbenzoic acid, vinylsulfonic acid, and 2-carboxyethyl acrylate;

b) positively charged monomers such as methacrylamidopropyltrimethylammonium chloride (MAPTAC),acrylamidopropyltrimethylammonium chloride (APTAC), 2-methacryloxyethyltrimethylammonium chloride, methacryloylcholine methyl sulphate, 2-N-morpholinoethyl acrylate, 2-N-morpholinoethyl methacrylate, 1-vinylimidazole, 2, or 4-vinylpyridine, 2-acryloxyethyltrimethylammonium chloride, 2-aminoethyl methacrylate hydrochloride, N-(3-aminopropyl)methacrylamide hydrochloride, 2-(tert-butylamino)ethyl methacrylate, diallyamine, diallyldimethylammonium chloride, 2-(N,N-diethylamino)ethyl methacrylate, 2-(diethylamino)ethylstyrene, 2-(N,N-dimethylamino)ethyl acrylate, N-[2-(N,N-dimethylamino)ethyl]methacrylamide, 2-(N,N-dimethylamino)ethyl methacrylate, and N-[3-(N,N-Dimethylamino)propyl](meth)acrylamide; and

c) neutral hydrophilic monomer such as 4-hydroxybutyl methacrylate, 2-hydroxylethyl (meth)acrylate, N-(2-hydroxypropyl)methacrylamide, hydroxypropyl (meth)acrylate, (meth)acrylamide, N-methacryloylmorpholine, N-methylmethacrylamide, N-methlolacrylamide, monoacrykoxyethyl phosphate, 1,1,1-trimethylolpropane diallyl ether, 1,1,1-trimethylolpropane mono allyl ether, poly(ethylene glycol) monomethacrylate, poly(propylene glycol)monomethacrylate, N-isopropylacrylamide, N-vinylcaprolactam, N-vinylformamide, vinyl-4-hydroxybutylether, N-vinyl-N-methacetamide, vinyl methylsulfone, N-vinyl-2-pyrrolidone, N-vinylurea, acrylamide, N-acryloylmorpholine, N-acryloyltri(hydroxymethyl)methylamine, diethylacrylamide, N,N-diethylmethacrylamide, N,N-dimethylacrylamide,N,N-Dimethylmethacrylamide, glycerol monoacrylate, glycerol monomethacrylate, 2-(2-ethoxyethoxy)ethyl acrylate, and tetrahydrofurfuryl acrylate.

The random copolymers of hydrophilic and hydrophobic monomers can also optionally comprise one or more reactive monomers, such as methacrylic anhydride, vinyl azlactone, acrylic anhydride, allyl glycidyl ether, allylsuccinic anhydride, 2-cinnamoyloxyethyl acrylate, cinnamyl methacrylate, citraconic anhydride, and glycidyl acrylate. Presence of a reactive monomer can lead to composite materials having a chemically active filling or coating.

Examples of random copolymers of hydrophilic and hydrophobic monomers include poly(2-acrylamido-2-methylpropanesulfonic acid-co-N-t-butylacrylamide), poly(N-vinylformamide-co-N-t-butylacrylamide, poly(2-acrylamidopropane-trimethyl ammonium chloride-co-N-t-butylacrylamide), poly(methacrylamidopropane-trimethylammonium chloride-co-N-t-butylacrylamide), poly(2-acrylamido-2-methylpropanesulfonic acid-co-methylmethacylate) poly(N-vinylformamide-co-co-methylmethacylate), poly(2-acrylamidopropane-trimethyl ammonium chloride-co-methylmethacylate) and poly(methacrylamidopropane-trimethylammonium chloride-co-methylmethacylate).

Polymers that are insoluble but swellable in a polar solvent and that can be precipitated through changes in pH include, for example, chitosan, poly(vinylpyridine) and its lightly N-alkylated derivatives, and poly(methacrylic acid). While each of these polymers may precipitate at different pH values, in one embodiment chitosan is soluble in acid solutions (pH of about 5) and is precipitated in basic solutions (pH of about 8). In another embodiment, polyvinylpyridine can be solubilized at a pH of less than 3, and it can be precipitated at a pH greater than 5. In some embodiments, a pH precipitated polymer will no longer be soluble in solutions having pH values for which it was originally soluble.

Examples of gel polymers that are insoluble but swellable in organic solvents include, for example, poly(vinyl alcohol) in propanol (while PVA is insoluble but swollen in 1-propanol, it can be precipitated from a 10% aqueous solution with 1-propanol), poly(2-acrylamido-2-methyl-1-propanesulfonic acid) in acetone, poly(acrylic acid) in acetone and poly(diallydimethylammonium chloride) in acetone.

It is also possible to modify the gel-forming polymer such that it will bear functional groups. For example, when EVAL is utilised as the gel-forming polymer, acrolein can added to functionalise the EVAL. This modified EVAL can then be combined with other monomers to form a grafted EVAL in which the grafted unit contains a desired functionality such as charged groups. This approach gives access to charged durable coatings based on EVAL. The advantage of this approach is that varying amounts of charge can be introduced into the coatings in a simple manner and that this can be regulated so as to give coatings with surface chemistries tuned to have reduced fouling properties or enhanced adsorption characteristics. Other modifying agents can include, for example, unsaturated carboxylic acid derivatives such as acrylyl chloride and methacrylyl chloride. Modification of the polymer can be carried out either prior to insertion within the pores of the support member, of the modification can be carried out in-situ in the pores.

*Porous Support Member*

The porous support member can have pores having an average diameter between about 0.1 and about 30 $\mu$m, and a volume porosity between about 40 and about 90 %. Volume porosity, $\varepsilon$, of a support can be calculated from the mass and volume of a geometrically regular sample, e.g., square, rectangular, or disk, provided that the specific density of the support polymer is known. The equation that can be used is:

$$\varepsilon = \left( \frac{V_s - \dfrac{m_s}{d_{polymer}}}{V_s} \right)$$

where $V_s$ is the volume of a geometrically regular support sample, $m_s$ is the mass of the sample, and $d_{polymer}$ is the density of the support polymer. For example, for polypropylene, $d_{polymer} = 0.91$ g/cm$^3$. A support material used to prepare a coated composite material can have, for example, pores having an average pore size of from about 0.1 to about 30 $\mu$m and a pore volume of from about 40 to about 90 vol-%. In another embodiment, such a support material can have pores with an average size between about 0.1 and about 25 $\mu$m and a pore volume of from about 60 to about 90 vol-%. A support material used to prepare a gel-filled composite material can have, for example, pores having an average pore size of from about 0.1 to about 5 $\mu$m and a pore volume of from about 40 to about 90 vol-%. In another embodiment, such a support material can have pores with an average size between about 0.1 and about 2.5 $\mu$m and a pore volume of from about 60 to about 90 vol-%.

Many porous materials can be used as the support member but the support is preferably a polymeric material, and it is more preferably a polyolefin. Examples of polyolefin support members include those made by thermally induced phase separation (TIPS), or non-solvent induced phase separation. Specific examples of suitable polyolefin support materials include SUPOR® polyethersulfone membranes manufactured by Pall Corporation, Cole-Parmer® Teflon® membranes, Cole-Parmer® nylon membranes, cellulose ester membranes manufactured by Gelman Sciences, and Whatman® filter and papers. Non-polymeric support members, such as ceramic-based supports, can also be used.

Additional types of support member materials include fibrous materials, examples of which include fibrous polyolefins such as non-woven fibrous polyesters or non-woven fibrous polypropylenes (available, for example, as TR2611A from Hollingsworth and Vose Company). Other types of fibrous materials include melt blowns or woven materials, which can comprise, for example, polyolefins, polyesters, polyamides or cellulosic materials.

The porous support member can take various shapes and sizes, such as, for example, flat sheets, spiral wound sheets, hollow fibres, and tubular membranes. In one embodiment, the support member is in the form of a flat sheet that has a thickness of from about 10 to about 1000 $\mu$m, in another embodiment from about 10 to about 500 $\mu$m, and in yet another embodiment from about 10 to about 300 $\mu$m.

*Process of Preparation*

One method for preparing a composite material according to the present invention comprises the precipitation of a gel-forming polymer within the pores of a support member.

As mentioned above, precipitation as used herein, represents a process by which a polymer constituting the dispersed (discontinuous) phase in a polymer solution inverts into a continuous phase of a swollen macromolecular network or gel. This can also be referred to as a phase inversion. The composite materials made using a precipitation route have been found to be different from and substantially more hydrophilic than those made by evaporative routes. Precipitation of the polymer can be achieved, for example, by liquid exchange, which consists of the precipitation of a polymer dissolved in a first solvent through the addition of a non-solvent.

The liquid exchange precipitation method comprises the steps of dissolving the polymer in a suitable first solvent, filling the pores of the support member with the solution obtained, and introducing a second solvent to the pores to precipitate out the polymer from the dispersed phase in the homogeneous solution in the first solvent to a continuous phase of three-dimensional polymer network remaining in the pores. Precipitation can be caused by the general insolubility of the polymer in the second solvent due to differences in hydrophilicity or hydrophobicity, or due to differences in pH. In the case where a change in pH is used to precipitate the polymer, the first and second solvents can be similar polar solvents having different pH values. When discussed herein, the first and second solvents can independently represent a single solvent, or they can independently represent a mixture of solvents.

In addition to being a very simple process, it has been discovered that with certain polymers (e.g. EVAL), use of the precipitation process leads to hydrophilic wettable composite materials when other processes, such as evaporation, only produce non-wettable composite materials from the same polymer. In some embodiments, a composite material according to the invention comprising gel-coated pores will have a wetting time of less than 5 minutes at ambient temperature and pressure. A similar composite material prepared through evaporation will either have a much greater wetting time, or will be unwettable.

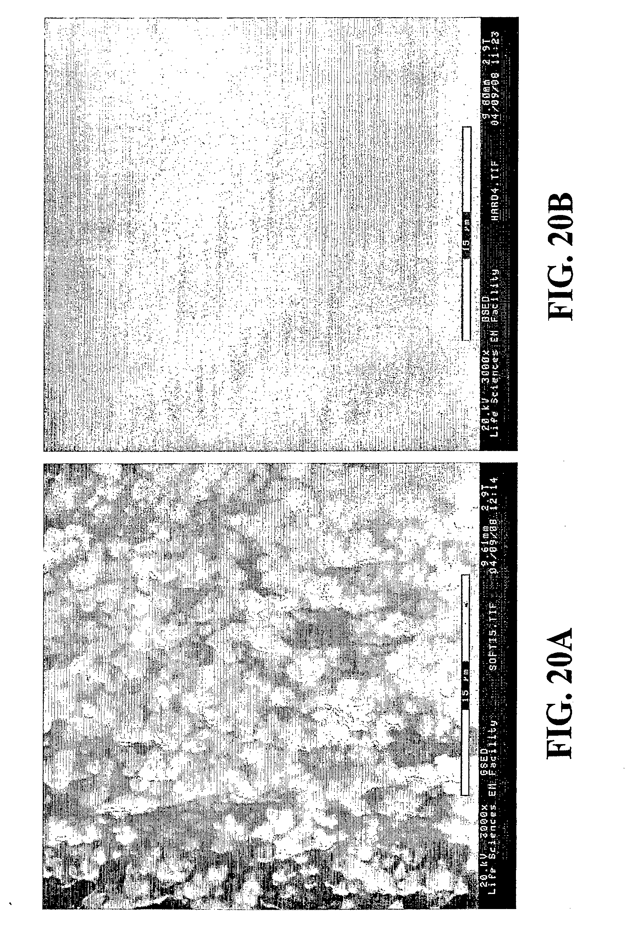

Without wishing to be bound by theory, it is believed that the gel polymer, when precipitated, is more oriented than when it is prepared through complete evaporation of the solvent in the polymer solution, which increased orientation leads to composite materials having greater wettability. This increased orientation can be seen when poly(ethylene-co-vinyl alcohol) (EVAL) is used as the gel polymer, as composite materials prepared by precipitating EVAL are much more hydrophilic than similar composite materials prepared by evaporation. Study of these similar composite materials by Electron Spectroscopy for Chemical Analysis (ESCA) shows that the surface oxygen concentration of precipitated EVAL composite materials is much higher. ESEM images of gel films obtained by precipitation of EVAL in water (A) and by evaporation (B) are shown in Figures 20 (A) and 20 (B).

When using a liquid exchange precipitation method to prepare the composite material of the invention, the characteristics of the gel polymer that coats or fills the pores of the support member can be controlled through the selection of the polymer used (nature of the polymer), by the concentration of the polymer in the first solvent, and by the choice of the first solvent used. When a lower concentration of gel polymer is used (e.g. less than about 10%, from about 0.5% to about 5%, or from about 2.5% to about 5%), a pore-coated composite material is produced. Alternatively, when a higher concentration of gel polymer is used (about 10% or greater), a pore-filled composite material can be produced.

The precipitation step can be carried out, for example, over a period of 10 seconds or greater. In one embodiment, the precipitation step is carried out over a period of about 10 minutes. Following the precipitation step, the formed gel can optionally be washed with a solvent in which the gel is non-soluble but swellable to remove any leachables from the composite material.

Once the gel polymer is formed in the pores of the support member, it is substantially stable, i.e. the pores are durably filled or coated. Further, the gel polymer is not removed by passage of large volumes of liquids through the composite material even under fairly high hydraulic flow and, in some embodiments, when subjected to changes in pH.

Generally, the precipitation method has the advantages that:

a) it provides a different composition for the composite material than with an evaporation process;

b) it offers a simple method to control the amount of gel polymer found in the composite material, which leads to a control over thickness of the coating layer;

c) it permits the use of a single process to prepared pore-filled and pore-coated composite materials;

d) the gel distribution and morphology can be controlled by controlling the penetration of the second solvent. As such, asymmetrically coated or filled composite materials can be prepared. Asymmetric composite materials are those where the support member has a void volume that is not completely occupied by the gel, and the density of the gel is greater at or adjacent to a first major surface of the support member than the density at or adjacent to a second major surface of the support member;

e) there is no need for low molecular weight organic molecules, such as monomers, initiators, and cross-linking agents, therefore avoiding the need for their subsequent removal;

f) the amount of organic solvent used is less than with traditional methods; and

g) the process is simple and rapid, and it can be readily scaled to a continuous production.

In one embodiment, the second solvent can be maintained at a higher temperature during step b). The second solvent can be maintained, for example, at a temperature of from 35 to 95, or from about 50 to about 70°C. The increased temperature during step b) can lead, in some embodiments, to composite materials that have better rewetting characteristics.

As an additional and optional step, the composite material can be autoclaved while immersed in water. Such a process can be carried out, for example, by immersing the composite material in water and then autoclaving the composite material. The autoclave temperature can be, for example, about 120°C. The duration of the autoclave step can be, for example, about 30 minutes. The autoclaving step can lead, in some embodiments, to composite materials that have better rewetting characteristics.

As yet another additional and optional step, the composite material can be immersed in boiling water. Such a process can be carried out, for example, by immersing the composite material in boiling water for about 30 minutes. Similarly with the autoclaving process described above, the immersion in boiling water can lead, in some embodiments, to composite materials that have better rewetting characteristics.

As yet another additional and optional step, a humectant, which is typically a high boiling hydroscopic liquid such as glycerol, can be added to the composite material, preferably in an amount of up to 30% by weight of the gel polymer. Addition of a humectant is useful when the composite material is to be dried, as the presence of such an agent aids in preventing a collapse of the tri-dimensional gel polymer network.

*Co-precipitated Cross-linked Additives*

In one embodiment, an additive can be co-precipitated with the gel-forming polymer to enhance the characteristics of the composite material obtained. Without wishing to be bound by theory, it is believed that the cross-linked additives become entangled with the gel polymer, which retains the additives within the pores of the support member.

These additives can be, for example, cross-linked charged or neutral polymers. The addition of a cross-linked additive can, for example, provide coatings in which there is a controlled amount of charge introduced into the coating. By regulating the amount of charge, the fouling properties of the coated materials can be modified and enhanced. This coprecipitation route has the additional advantage that it is very simple to carry out and that it can enhance the durability of the gel polymer coatings. In the absence of the gel-forming polymer the additives are not precipitated to form stable coatings.

The cross-linked additive can be formed, for example, from a polymerisable monomer and a cross-linkable polymer.

Examples of suitable polymerisable monomers include monomers containing vinyl or acryl groups. In some embodiments, there can be used vinyl or acryl monomers containing at least one polar and/or ionic functional group, or functional group that can be converted into ionic group. In other embodiments, there can be used vinyl or acryl monomers containing at least one reactive functional group. Preferred polymerisable monomers include acrylamide, 2-acryloxyethyltrimethylammonium chloride, N-acryloxysuccinimide, N-acryloyltris(hydroxymethyl)methylamine, 2-aminoethyl methacrylate hydrochloride, N-(3-aminopropyl)methacrylamide hydrochloride, butyl acrylate and methacrylate, N,N-diethylacrylamide, N,N-dimethylacrylamide, 2-(N,N-dimethylamino)ethyl acrylate and methacrylate, N-[3-(N,N-dimethylamino)propyl]methacrylamide, N,N-dimethylacrylamide, n-dodecyl acrylate, n-dodecyl methacrylate, dodecyl methacrylamide, ethyl methacrylate, 2-(2-ethoxyethoxy)ethyl acrylate and methacrylate, 2,3-dihydroxypropyl acrylate and methacrylate, glycidyl acrylate and methacrylate, n-heptyl acrylate and methacrylate, 1-hexadecyl acrylate and methacrylate, 2-hydroxyethyl acrylate and methacrylate, N-(2-hydroxypropyl)methacrylamide, hydroxypropyl acrylate and methacrylate, methacrylamide, methacrylic anhydride, methacryloxyethyltrimethylammonium chloride, 2-(2-methoxy)ethyl acrylate and methacrylate, octadecyl acrylamide, octylacrylamide, octyl methacrylate, propyl acrylate and methacrylate, N-iso-propylacrylamide, stearyl acrylate, styrene, 4-vinylpyridine, vinylsulfonic acid, N-vinyl-2-pyrrodinone, diallyldimethylammonium chloride (DADMAC), 2-acrylamido-2-methyl-1-propanesulfonic acid (AMS), and 3(methacryloylamino)propyltrimethyl ammonium chloride (MAPTAC). Particularly preferred monomers include dimethyldiallylammonium chloride, acrylamido-2-methyl-1-propanesulfonic acid (AMPS), (3-acrylamidopropyl) trimethylammonium chloride (APTAC), acrylamide, methacrylic acid (MAA), acrylic acid (AA), 4-styrenesulfonic acid and its salts, acrylamide, glycidyl methacrylate, diallylamine, diallylammonium chloride, diallyldimethylammonium chloride (DADMAC), 2-acrylamido-2-methyl-1-propanesulfonic acid (AMS), and 3(methacryloylamino)propyltrimethyl ammonium chloride (MAPTAC).

The crosslinker may be, for example, a compound containing at least two vinyl or acryl groups. Examples of cross-linkers include bisacrylamidoacetic acid, 2,2-bis[4-(2-acryloxyethoxy)phenyl]propane, 2,2-bis(4-methacryloxyphenyl)propane, butanediol diacrylate and dimethacrylate, 1,4-butanediol divinyl ether, 1,4-cyclohexanediol diacrylate and dimethacrylate, 1,10-dodecanediol diacrylate and dimethacrylate, 1,4-diacryloylpiperazine, diallylphthalate, 2,2-dimethylpropanediol diacrylate and dimethacrylate, dipentaerythritol pentaacrylate, dipropylene glycol diacrylate and dimethacrylate, N,N-dodecamethylenebisacrylamide, divinylbenzene, glycerol trimethacrylate, glycerol tris(acryloxypropyl) ether, N,N'-hexamethylenebisacrylamide, N,N'-octamethylenebisacrylamide, 1,5-pentanediol diacrylate and dimethacrylate, 1,3-phenylenediacrylate, poly(ethylene glycol) diacrylate and dimethacrylate, poly(propylene) diacrylate and dimethacrylate, triethylene glycol diacrylate and dimethacrylate, triethylene glycol divinyl ether, tripropylene glycol diacrylate or dimethacrylate, diallyl diglycol carbonate, poly(ethylene glycol) divinyl ether, N,N'-dimethacryloylpiperazine, divinyl glycol, ethylene glycol diacrylate, ethylene glycol dimethacrylate, N,N'-methylenebisacrylamide, 1,1,1-trimethylolethane trimethacrylate, 1,1,1-trimethylolpropane triacrylate, 1,1,1-trimethylolpropane trimethacrylate, vinyl acrylate, 1,6-hexanediol diacrylate and dimethacrylate, 1,3-butylene glycol diacrylate and dimethacrylate, alkoxylated cyclohexane dimethanol dicarylate, alkoxylated hexanediol diacrylate, alkoxylated neopentyl glycol diacrylate, aromatic dimethacrylate, caprolacone modified neopentylglycol hydroxypivalate diacrylate, cyclohexane dimethanol diacrylate and dimethacrylate, ethoxylated bisphenol diacrylate and dimethacrylate, neopentyl glycol diacrylate and dimethacrylate, ethoxylated trimethylolpropane triarylate, propoxylated trimethylolpropane triacrylate, propoxylated glyceryl triacrylate, pentaerythritol triacrylate, tris (2-hydroxy ethyl)isocyanurate triacrylate, di-trimethylolpropane tetraacrylate, dipentaerythritol pentaacrylate,ethoxylated pentaerythritol tetraacrylate, pentaacrylate ester, pentaerythritol tetraacrylate, caprolactone modified dipentaerythritol hexaacrylate, and trimethylolpropane tricarylate (TRIM). Particularly preferred cross-linking agents include N,N',-methylenebisacrylamide, diethylene glycol diacrylate and dimethacrylate, trimethylolpropane triacrylate, ethylene glycol diacrylate and dimethacrylate, tetra(ethylene glycol) diacrylate, 1,6-hexanediol diacrylate, divinylbenzene, poly(ethylene glycol) diacrylate and trimethylolpropane tricarylate (TRIM).

When a cross-linkable polymer is used, it can be dissolved and reacted in-situ in the support with a cross-linking agent. Suitable cross-linkable polymers include poly(ethyleneimine), poly(4-vinylpyridine), poly(vinylbenzyl chloride), poly(diallylammonium chloride), poly(glycidyl methacrylate), poly(allylamine), copolymers of vinylpyridine and dimethyldiallylammonium chloride, copolymers of vinylpyridine, dimethyladiallylammonium chloride, or (3-acrylamidopropyl)trimethylammonium chloride with glycidyl acrylate or methacrylate, of which poly(ethyleneimine), poly(diallylammonium chloride), and poly(glycidyl methacrylate) are preferred. Use of cross-linkable polymers instead of monomers can, in some instances, require a decrease in the concentration of cross-linking agent.

The cross-linking agent for reaction with the cross-linkable polymer is selected from molecules containing two or more reactive groups that can react with an atom or group of atoms in the polymer to be cross-linked, such as epoxy groups or alkyl/aryl halides that can react with nitrogen atoms of polyamines, or amine groups that can react with alkyl/aryl halides or epoxy groups of glycidyl-group-containing polymers to be in situ cross-linked. Suitable cross-linkers include ethylene glycol diglycidyl ether, poly(propylene glycol) diglycidyl ether, 1,3-dibromopropane, 1,4-dibromobutane, 1,5-dibromopentane, 1,6-dibromohexane, $\alpha,\alpha$'-dibromo-p-xylene, $\alpha,\alpha$'-dichloro-p-xylene, 1,4-dibromo-2-butene, piperazine, 1,4-diazabicyclo[2.2.2]octane, 1,2-diaminoethane, 1,3-diaminopropane, 1,4-diaminobutane, 1,5-diaminopentane, 1,6-diaminohexane, 1,7-diaminoheptane, 1,8-diaminooctane.

The reactions to form the co-precipitating gel can be initiated by any known method, for example through thermal activation or U.V. irradiation. Many suitable photoinitiators can be used, of which 2-hydroxy-1[4-2(hydroxyethoxy)phenyl]-2-methyl-1-propanone (Irgacure 2959*), and 2,2-dimethoxy-2-phenylacetophenone (DMPA) are preferred. Other suitable photoinitiators include benzophenone, benzoin and benzoin ethers such as benzoin ethyl ether and benzoin methyl ether, dialkoxyacetophenones, hydroxyalkylphenones, $\alpha$-hydroxymethyl benzoin sulfonic esters. Thermal activation requires the addition of a thermal initiator. Suitable thermal initiators include 1,1'-azobis(cyclohexanecarbonitrile) (VAZO® catalyst 88), azobis(isobutyronitrile) (AIBN), potassium persulfate, ammonium persulfate, and benzoyl peroxide. Preferably, thermally initiated polymerization is carried out at 60-80°C for a few minutes up to 16 hours.

If the reaction is to be initiated by U.V. irradiation, the mixture of gel-forming polymer, cross-linkable monomer or polymer, cross-linking agent and photoinitiator is subjected to U.V. irradiation at wavelengths of from 250 nm to 400 nm, for a period of a few seconds to a few hours. With certain photoinitiators, visible wavelength light may be used to initiate the polymerization. In some embodiments, the support material must have a low absorbance at the wavelength used, to permit transmittance of the UV rays through the support. Preferably, the mixture is irradiated at 350nm for a few seconds to up to 2 hours.

In some embodiments, the formation of the cross-linked additive that is to be co-precipitated can be carried out by insertion of the precursor materials into a suitable support member, initiation of the formation of the cross-linked additive, followed by precipitation. The advantage of carrying out the reactions in this manner is that it simplifies the process of making composite materials and makes filling of the support member simpler due to the lower viscosity of the filling solutions. In another embodiment, the cross-linking reaction is carried prior to the insertion of the gel-forming polymer and cross-linkable additive into the support material. In this later embodiment, the additive concentration must be kept low enough to avoid precipitation of the additive (both in non-crosslinked and crosslinked forms) out of the solvent prior to insertion of the polymer solution in the support member. The monomers and cross-linker that form the additive, as well as the cross-linked polymer that will be co-precipitated, should be soluble in the solvent that forms the polymer solution.

*Use of the Composite Material*

The composite material benefits from many advantages over previously known composite materials. As a broad range of polymers can be used to coat or fill the pores of the support member, the composite material can be tailored to have superior separation properties, to bear a controlled number of charged groups and/or to display good chemical resistance.

The use of a precipitation technique to obtain the gel polymer gives rise to many advantages, mainly with regard to the wettability of the composite material produced. Membranes prepared through evaporation have been described, for example, in JP 2002233739, U.S. Pat. No.5,084,173 and EP 0498414 A2. In these documents, the preparation of an EVAL containing membrane involves the following steps:

applying to a porous matrix a polymer solution in organic solvent or a mixture of an organic solvent and water; and

drying the membrane to remove organic solvent or mixture of an organic solvent and water so that copolymer forms a coat layer covering substantially the overall surface of the substrate.

While the composite porous membranes disclosed in the above references were claimed to show excellent mechanical strength in the wet state, good dimensional stability, and ready wettability with water, the Examples herein demonstrate that the wettability of the composite material, which comprises a precipitated gel polymer, is superior than that obtained with evaporation techniques.

The composite materials are very stable over long periods of time and use. In the case of composite materials comprising water insoluble but swellable gel polymers subjected to water-based feeds, this stability holds true even when the contacting solutions are either strongly acidic or strongly basic. While the robustness of the composite material is mostly dependent on the stability of the gel polymer used, the composite material of the invention is also advantageous in that there are no reactions taking place on the surface of the pores of the support member (no grafting), which avoids unwanted changes in the support member that could lead to its deterioration.

Another advantage of the composite material lies in the fact that it is possible, in some embodiments, to remove the gel polymer from a used composite material by simply eluting through the composite material a solvent in which the gel polymer is soluble. This allows the recycling of either or both the support member and gel polymer.

Where the gel polymer contains charged groups and fills the pores of the support member, the resulting composite material can function, in some embodiments, as a nanofiltration membrane. One application of such composite materials is in the field of water softening (salt removal), including domestic water softening. When the composite materials contain negatively charged polymers, the composite materials are exceptionally good at removing humic substances from water with no, or very little, composite material fouling, and this removal can be achieved at very high fluxes and low trans-membrane pressures. One application of this technology is in the treatment of surface waters to remove the coloring that results from the presence of humic materials. Removal of colored species is important not only for aesthetic purposes, but also to allow the effective use of UV sterilisation techniques that render water safe to drink. Removal of humic materials is especially important, for example, in remote communities or at mine sites. Such a process is also useful where chlorine sterilisation techniques are used, as humic materials react with chlorine to form halomethanes and related materials, to introduce harmful materials into the treated water.

The pore-filled composite materials can also act, in some embodiments, as ultrafiltration composite materials. In the case of ultrafiltration composite materials the precipitated gel polymer can be either charged or neutral. Ultrafiltration applications are especially of interest in the biopharmaceutical and food/beverage industries.

The composite material can also be used, in some embodiments, for filtration or separation of organic/organic mixtures, e.g. the separation of small molecules from organic solvents. One example of such a filtration or separation is the separation of low molecular weight materials, such as monomers and small oligomers, from an organic solvent in which is dissolved a polymer.

Coated composite materials can also be used, in some embodiments, for the adsorption of proteins and other biomolecules.

The invention is further illustrated by the following nonlimiting Examples.

*Examples*

*Materials Used*

Polymers used were poly(ether-ether-ketone)(PEEK)(VICTREX PEEK 450 PF, VICTREX USA, Inc.), poly(ether sulfone) (PES) (Radel A-100, VICTREX USA, Inc.), poly(2,6-dimethyl-p-phenylene oxide)(PPO)(Polysciences, Inc.), polystyrene (PSt)(Aldrich), poly(vinylbenzyl chloride)(PVB)(Aldrich), chitosan (low molecular weight, Aldrich), polyethylene glycol 10 000 (Fluka), and poly(styrenesulfonic acid) (Polysciences, Inc.).

Monomers used were N-tert-butylacrylamide (Aldrich), N-vinylformamide (NtBA) (Aldrich), 2-acrylamido-2-methylpropanesulfonic acid (AMPS)(Aldrich), diallyldimethylammonium chloride (DADMAC)(Aldrich), 3(methacryloylamino)propyltrimethyl ammonium chloride (MAPTAC), acrylic acid (AA), trimethylolpropane triacrylate (Aldrich), and acrolein (Aldrich).

The foulant used was bentonite (Aldrich).

Dyes used were ethidium bromide (Aldrich) and metanil yellow (Aldrich).

Concentrated sulphuric acid and chlorosulfonic acid (Aldrich) were used as sulfonating agents for PEEK, PPO, PES or PSt. Trimethylamine (Aldrich) was used as an aminating agent for PVB.

Solvents used were chloroform (CALEDON), N,N'-dimethylformamide (CALEDON), 1-methyl-2-pyrrolidinone (Aldrich),N,N-dimethylacetamide, methanol (CALEDON) and ethanol.

Other chemicals used were humic acid (Aldrich), hydrochloric acid, acetic acid, sodium hydroxide, and sodium chloride (Aldrich).

Flat sheet substrates and hollow fibre composite materials were used as support members. The flat sheet substrate was a poly(propylene) thermally induced phase separation (TIPS) composite material PP1545-4 with an average pore diameter of 0.45 $\mu$m, thickness of 125 $\mu$m, and porosity of 85 vol-%. The hollow fibre support member used was a poly(propylene) (Accurel Q3/1, Membrana GmbH, Germany) with an inner diameter of 600 $\mu$m, outer diameter of 1000 $\mu$m, porosity of 70% and pore size of 0.1 (mean) and 0.45 (max). Other porous supports used were PTFE with thickness of 48.8 $\mu$m, PE 954-8B with thickness of 18.6 $\mu$m, PE 690-6A with thickness of 90.5 $\mu$m.

*Equipment used*

Feed pump: MasterFlex L/S Pump drive Model No.7523-60 (Barnant Co.), Pump head Model 77201-62 (Cole-Palmer Instrument Co).

Permeate pump: MCP standard drive order No.ISM 404 (ISMATEC).

Flowmeter: Shielded flowmeter size #4 GF-1460 (GILMONT Instrument).

Manometer: Pressure range 0~30 psi (SPER SCIENTIFIC LTD).

Preparation of Materials

*Sulfonation of poly(2,6-phenylene-p-oxide)*

The sulfonation of poly(2,6-phenylene-p-oxide)(PPO) was carried out in a chloroform solvent system at ambient conditions using chlorosulfonic acid as the sulfonating agent. 9 g of pre-dried PPO were dissolved in 300g of chloroform at room temperature. Then, 9ml of chlorosulfonic acid in 150 ml of chloroform were introduced via dropping funnel over a period of 5 hrs at room temperature and during vigorous stirring. As sulfonation progressed, sulfonated PPO (SPPO) precipitated from the solution as SPPO is not soluble in chloroform. The precipitate was dissolved in 100 ml of methanol, poured into a petri dish and the solvent was evaporated. The thick film thus formed was washed with a substantial amount of water until neutral and dried at room temperature.

*Sulfonation of poly(ether-ether-ketone)*

Poly(ether-ether-ketone)(PEEK) powder was dried at 120°C for 2 hrs and then cooled to room temperature prior to use. 20g of PEEK were dissolved in 300 ml of concentrated sulphuric acid (95-97%) under vigorous stirring. The reaction was allowed to continue for 150 (for a medium degree of sulfonation) and 200 hrs (for a high degree of sulfonation) at room temperature. Thereafter, the homogeneous polymer solution was precipitated in water and washed with water until neutral. The solid sulfonated polymer thus obtained was dried at room temperature for 48 hrs and additionally for 8 hrs at 60°C in an oven.

*Sulfonation of poly(ethersulfone)*

10g of poly(ether sulfone) (PES) were dissolved in 150 ml of concentrated sulphuric acid at 50°C under vigorous stirring. The reaction was allowed to proceed for 48 hrs. Thereafter, the polymer solution was precipitated in water and then washed with water until neutral. The modified polymer was dried at room temperature.

*Sulfonation of polystyrene*

The sulfonation of polystyrene (PSt) was carried out in a chloroform solvent system under ambient conditions using chlorosulfonic acid as a sulfonating agent. 9g of pre-dried PSt were dissolved in 300g chloroform at room temperature under vigorous stirring. Then, 6ml of chlorosulfonic acid in 150 ml of chloroform were introduced via dropping funnel over a period of 5 hrs at room temperature. As sulfonation progressed, sulfonated polystyrene (SPSt) precipitated from the solution as SPSt was not soluble in chloroform. The precipitate was dissolved in 100 ml of N,N'-dimethylformamide and precipitated into water. Thereafter, the precipitated polymer was washed with a substantial amount of water until neutral and dried at room temperature.

Amination *of poly(vinylbenzyl chloride)*

Amination of poly(vinylbenzyl chloride) (PVB) was carried out in a 1-methyl-2-pyrrolidinone (NMP) solvent system at ambient conditions using trimethylamine gas as an aminating agent. Thus, 5g of PVB were dissolved in 20g of NMP at room temperature under vigorous stirring. Then, trimethylamine gas was bubbled into the polymer solution at a low flow rate for 30 min. Then, the polymer solution was stirred for 5 hrs to complete the reaction. Aminated polymer was used without further purification.

*Synthesis of a copolymer of 2-acrylamido-2-methylpropanesulfonic acid (AMPS) and N-tert-butylacrylamide (N-tBAm)*

In 100ml flask was charged 8.8486g NtBAm, 1.6054g AMPS, 0.0552g Irgacure®2959(photoinitiator), and 33.0183 g methanol. The solution was magnetically stirred until all solids dissolved; then the solution was irradiated at 350nm for 80min in a photoreactor equipped with eight parallel UV lamps (Microlites Scientific) at a distance of 20cm from the surface. Upon completion, a viscous solution was obtained and stored for use.

*Synthesis of a N-vinylformide (NVF) and N-tBAm copolymer*

A 20ml vial was charged 1.3677g NtBAm, 0.5100g NVF, 0.0199g Irgacure®2959(photoinitiator), 0.6894 g water, and 8.5922g methanol. The solution was magnetically stirred until all solids dissolved, and the solution was then irradiated for 50min in a photoreactor equipped with eight parallel UV lamps (Microlites Scientific) at a distance of 20cm from the surface. Upon completion, a viscous solution was obtained and stored for use.

*Synthesis of a N-vinylformide(NVF), glycidyl methacrylate (GMA) and N-tBAm copolymer*

A 20ml vial was charged 1.5142g NtBAm, 0.6627g NVF,0.6165g GMA,0.0166g Irgacure®2959(photoinitiator), 2.9053 g water,4.0207g 1,4-Dioxane and 5.8449g ethanol. The solution was magnetically stirred until all solids dissolved, and the solution was then irradiated for 60min in a photoreactor equipped with eight parallel UV lamps (Microlites Scientific) at a distance of 20cm from the surface. Upon completion, a viscous solution was obtained and stored for use.

Description of Experimental Procedures

*Preparation of flat sheet pore-filled composite material*

The pore-filled composite material of the invention can be prepared according to the following general procedure. A weighed flat support member was placed on a poly(ethylene)(PE) sheet and a polymer solution was applied to the sample. The sample was subsequently covered with another PE sheet and a rubber roller was run over the sandwich to remove excess solution. The resulting filled material was immersed in water to exchange the solvent and precipitate the polymer inside the pores. The composite material was then thoroughly washed with water and stored in distilled water or a salt solution.

*Preparation of hollow fibre pore-filled materials*

Hollow fibre support members were potted in a polyethylene tube using a Mastercraft epoxy resin. The composite material was manufactured either by a dipping process, or by a dipping process couple with a vacuum system. In the first process, a weighed potted sample of the hollow fibre support member was dipped in a solution of the polymer for 15 minutes with only the outer surface of the support member in direct contact with the solution. In the second case a weighed potted sample of the hollow fibre support member was connected to a vacuum line and a polymer solution was applied by brush to the support member surface at the same time as vacuum was applied. The procedure was carried out for 10 minutes. The excess solution in the lumen of the fibre was removed by passing a small stream of nitrogen for 60 seconds. Thereafter, potted support members were immersed in water to exchange the solvent and precipitate the polymer inside pores. The composite materials were then thoroughly washed with water and kept in water or salt solution.

*Characterisation of flat sheet and hollow fibre pore-filled composite materials*

The pore filled composite materials were characterised by mass gain, ion-exchange capacity (charge density) and gel concentration (volume fraction). Additionally, environmental scanning electron microscopy (ESEM) studies and confocal microscopic analysis were carried out.

*Mass gain*

In order to determine the amount of gel formed in the support member, the sample was dried in vacuum at room temperature to a constant mass. The mass gain due to gel incorporation was calculated as a ratio of an add-on mass of the dry gel to the initial mass of the porous support member.

*Ion-exchange capacity*

Ion-exchange capacity (IEC) was estimated by two different procedures: by acid-base titration and by salt exchange with following ion analysis using ion-chromatography.

*Acid-base titration*

For negatively charged composite materials (containing -SO$_3^-$ groups):

A composite material sample was placed in 1N HCl for 24 hrs to reactivate negatively charged sites. Then, the material was washed with water until neutral. To confirm that neutrality, conductivity test was carried out until the washed water had a similar conductivity as that of deionized water. Thereafter, the sample was cut in small pieces, placed in a 250 ml flask and 100 ml 0.1N NaOH was added.
The sample was left in this solution for 24 hrs. Then, a 10 ml aliquot was taken and titrated with 0.1N HCl using methyl orange as an indicator. IEC was estimated according to the formula

$$IEC = \frac{(N_{NaOH} \cdot V_{NaOH}) - (10 \cdot N_{HCl} \cdot V_{HCl})}{m_{dry}}$$

where $N_{NAOH}$, $N_{HCl}$ is normality of NaOH and HCl; $V_{NaOH}$, $V_{HCl}$ is volume of NaOH and HCl; and $m_{dry}$ is mass of the dry sample.

For positively charged composite materials (containing quaternary ammonium groups):

A composite material sample was placed in 1N NaOH for 24 hrs to reactivate positively charged sites. Then, the sample was washed with water until neutral. To confirm neutrality, a conductivity test was carried out until washed water had similar conductivity as to that of deionized water.
Thereafter, the sample was cut in small pieces, placed in a 250 ml flask and 100 ml 0.1N HCl was added. The sample was left in this solution for 24 hrs. Then, a 10 ml aliquot was taken and titrated with 0.1N NaOH using methyl orange as an indicator. IEC was estimated according to the formula

$$IEC = \frac{(N_{HCl} \cdot V_{HCl}) - (10 \cdot N_{NaOH} \cdot V_{NaOH})}{m_{dry}}$$

where $N_{NAOH}$, $N_{HCl}$ is normality of NaOH and HCl; $V_{NaOH}$, $V_{HCl}$ is volume of NaOH and HCl; and $m_{dry}$ is mass of the dry sample.

*Salt exchange*

For negatively charged composite materials (containing $-SO_3^-$ groups):

A composite material sample was placed in 1N NaCl for 24 hrs to convert negatively charged sites in $Na^+$ - form. Then, the sample was washed with water to remove excess of salt solution. Thereafter, the sample was cut in small pieces, placed in a 500 ml flask and 100 ml 0.05M $Ca(Cl)_2$ was added.
The sample was left in this solution for 24 hrs. Then, the solution was diluted with water to 500 ml and tested with an ion-chromatograph on sodium content at least 3 times. IEC was estimated according to the formula:

$$IEC = \frac{C_{Na} \cdot V}{M_{Na} \cdot m_{dry}}$$

where $C_{Na}$ is a sodium content (ppm) ; V is a total volume; $M_{Na}$ is a molecular weight of sodium; and $m_{dry}$ is a mass of dry sample.

For positively charged composite materials (containing quaternary ammonium groups):

A composite material sample was placed in 1N NaCl for 24 hrs to convert positively charged sites into $Cl^-$ form. Then, the sample was washed with water to remove excess salt solution. Thereafter, the sample was cut in small pieces, placed in a 500 ml flask and 100 ml 0.05M $Na_2SO_4$ was added. The sample was left in this solution for 24 hrs. Then, the solution was diluted with water to 500 ml and tested with ion-chromatograph on chloride content at least 3 times. IEC was estimated as follows:

$$IEC = \frac{C_{Cl} \cdot V}{M_{Cl} \cdot m_{dry}}$$

where $C_{Cl}$ is the chloride content (ppm); V is the total volume; $M_{Cl}$ is the molecular weight of chloride; and $m_{dry}$ is the mass of the dry sample.

*Gel concentration (volume fraction)*

The gel concentration (volume fraction), $\phi$, was calculated from the formula

$$\phi = \frac{(m_{m,dry} - m_s)\vartheta_2}{V_s \varepsilon}$$

where $m_{m,dry}$ is the mass of a pore-filled sample (in a dry state), $m_s$ is the mass of the support member in the sample, $\upsilon_2$ is the partial specific volume of the gel polymer, $V_s$ is the support member volume in the sample, and s is the support member porosity.

*Protein adsorption/desorption experiment*

Protein adsorption studies were carried out with lysozyme. In the case of experiments with a negatively charged composite material in the form of a membrane, the sample was first washed with distilled water and subsequently with an MES-buffer solution (pH=5.5). In the adsorption step, a composite material sample in a form of a single membrane disk of diameter 7.8 cm was mounted on a sintered grid of 3-5 mm thickness in a cell used for water flux measurements as described below. A lysozyme solution, comprising from 0.4 to 0.5 mg lysozyme per ml of buffer solution, was poured to the cell to give a 5 cm head over the composite material. This hydrostatic pressure of 5 cm was kept constant by further additions of the lysozyme solution. The flow rate was measured by weighing the amount of permeate as a function of time. Permeate samples were collected at 4-5 min intervals and analyzed by UV analysis at 280 nm. Following the adsorption step, the composite material in the cell was washed with about 200 ml of the MES-buffer solution, and desorption was carried out with a TRIS-buffer solution containing 1M NaCl at 5 cm head pressure or under a controlled pressure of compressed nitrogen. The permeate samples were collected at 4-5 min intervals and tested by UV analysis at 280 nm for lysozyme content.

*Environmental scanning electron microscopy (ESEM) study*

For environmental scanning electron microscopy (ESEM) study, the composite material sample was glued to aluminium stubs with a mixture of paper glue and colloidal graphite paste (J.B.E.M. Services, Dorval, Quebec). The sample on the stubs was viewed in an ElectroScan model 2020 ESEM (Electro Scan Corp., Wilmington, MA). The energy-dispersive X-ray (EDX) analysis of the sample was carried out with a PGT PRISM Si(Li) thin-window X-ray detector (Princeton Gamma-Tech, Princeton, NJ) mounted in the ESEM and connected to a PGT model IMIX-PTS microanalysis system. The line profile was generated by 60 sec analysis of cross sections of a sample to obtain the distribution of sulphur across the sample.

*Confocal microscopic analysis*

For confocal microscopic analysis, the composite material sample was soaked in an aqueous solution of ethidium bromide dye ($10^{-5}$M, $\lambda_{exc}$=510nm, $\lambda_{emmis}$=595nm) (for negatively charged composite material samples) overnight at room temperature. The sample was washed with water and then stored in deionised water before analysis. The wet sample was removed, cut thinly with a razor and placed on microscope slides with a cover slip. The wet sample was viewed in a Carl Zeiss Laser fluorescence confocal microscope (LSM 510) (Carl Zeiss Corp., Germany) using a 63x magnification water immersion objective lens. An argon laser of 488 nm was used to excite the fluorophore in the sample.

*Transport property measurements*

Composite material samples were also characterised by transport properties such as water and salt flux, salt separation and hydrodynamic Darcy permeability (for flat sheet pore-filled composite materials).

*Water Flux Measurements (flat sheet pore-filled materials) and hydrodynamic Darcy permeability*

Water flux measurements through flat sheet pore-filled materials were carried out after the samples had been washed with water. As a standard procedure, a sample in the form of a disk of diameter 7.8 cm was mounted on a sintered grid of 3-5 mm thickness and assembled into a cell supplied with compressed nitrogen at a controlled pressure. The cell was filled with deionized water and a desired pressure was applied. The water that passed through the pore-filled material in a specified time was collected in a pre-weighed container and weighed. All experiments were carried out at room temperature and at atmospheric pressure at the permeate outlet. Each measurement was repeated three or more times to achieve a reproducibility of $\pm$ 5%.

The water flux, $Q_{H2O}$ (kg/m$^2$h), was calculated from the following relationship:

$$Q_{H_2O} = \frac{(m_1 - m_2)}{A \cdot t}$$

where $m_1$ is the mass of container with the water sample, $m_2$ is the mass of container, A is the active composite material surface area (38.5 cm$^2$) and t is the time.

The hydrodynamic Darcy permeability, k (m$^2$) of the composite material was calculated from the following equation

$$k = \frac{Q_{H_2O}\eta\delta}{3600 d_{H_2O}\Delta P}$$

where $\eta$ is the water viscosity (Pa·s), $\delta$ is the composite material thickness (m), $d_{H_2O}$ is the water density (kg/m³), and $\Delta P$ (Pa) is the pressure difference at which the flux, $Q_{H_2O}$. was measured.

*Salt separation experiment (flat sheet pore-filled materials)*

The salt separation experiment was carried out in a dead-end cell as described above for the water flux measurement. The cell was fitted with a thermocouple to measure temperature of the feed solution. The feed solution was stirred at the rate of 250-300 rpm. Permeate samples were collected over a given period and weighed. Samples were taken at 100, 200, 300, 400 and 500 kPa. The flux (kg/m²hr) for a given pressure was calculated from the mass of permeate divided by time and the sample active area, and was corrected to 25°C as described above. The salt concentrations in feed and permeate were determine by conductivity (Model 105, Orion) or by ion chromatography (DIONEX, DX100). The solute rejections were calculated as the percentage of the solute removed from the feed solution (the ratio of the difference between the solute concentration in the feed and permeate to the feed concentration). Each measurement was repeated three or more times. The reproducibility of the measurements was ± 3%.

*Water and Salt Flux Measurements (hollow fibre pore-filled materials)*

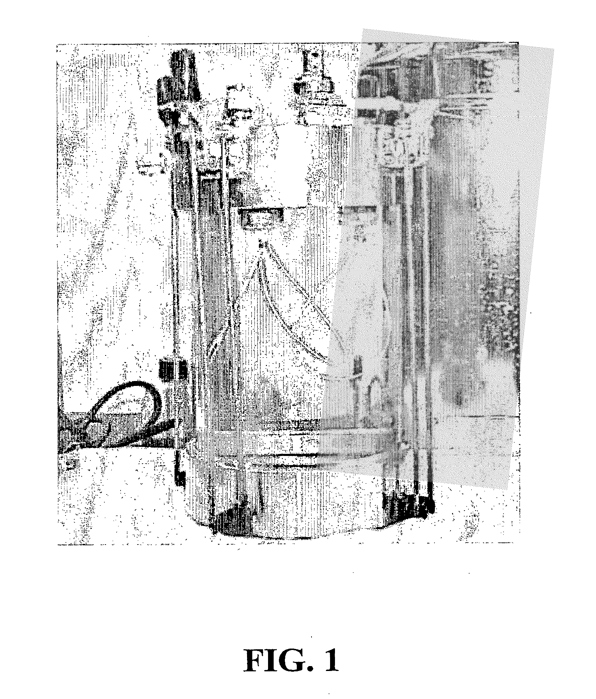

For flux measurements, a potted hollow fibre composite material sample was fixed on the top of a cell of the type shown in Figure 1. Flux and rejection measurements were carried out at various pressures (100-500 kPa). All measurements were done in triplicate. Pressurised nitrogen was used to force liquid through the composite material. The feed solution was stirred at the rate of 700-800 rpm. Permeate samples were collected over a given period and weighed. The flux at 25°C (kg/m²hr) was calculated from the mass of permeate divided by time and the composite material active area. The concentrations of inorganic solutes in the feed and permeate were determined either by conductivity meter (Orion 105) or by ion chromatography (DIONEX, DX100). The solute rejections were calculated as the percentage of the solute removed from the feed solution (the ratio of difference between the solute concentration in the feed and permeate to the feed concentration). Each measurement was repeated two or more times with a reproducibility of ± 5%.

*Humic acid separation experiment*

Flat sheet pore-filled samples were used for the humic acid separation experiment. The humic acid separation experiment was carried out in a dead-end cell as described above for the water flux experiment of the flat pore-filled composite material, only the feed solution was pumped (Pump P-1, Pharmacia Biotech) at the same flow rate as a permeation rate through the composite material. The cell was fitted with a thermocouple to measure temperature of the feed solution. The feed solution was stirred at the rate of 250-300 rpm. Permeate samples were collected over a given period and weighed. Samples were taken at 150 kPa. The flux (kg/m²hr) for a given pressure was calculated from the mass of permeate divided by time and the composite material active area, and was corrected to 25°C as described above. The humic acid concentrations in feed and permeate were determine by UV analysis at 280 nm. The solute rejections were calculated as the percentage of the solute removed from the feed solution (the ratio of the difference between the solute concentration in the feed and permeate to the feed concentration). Each measurement was repeated three or more times. The reproducibility of the measurements was ± 3%. The feed solution contained 50 ppm humic acid in tap water.

*Critical flux experiment*

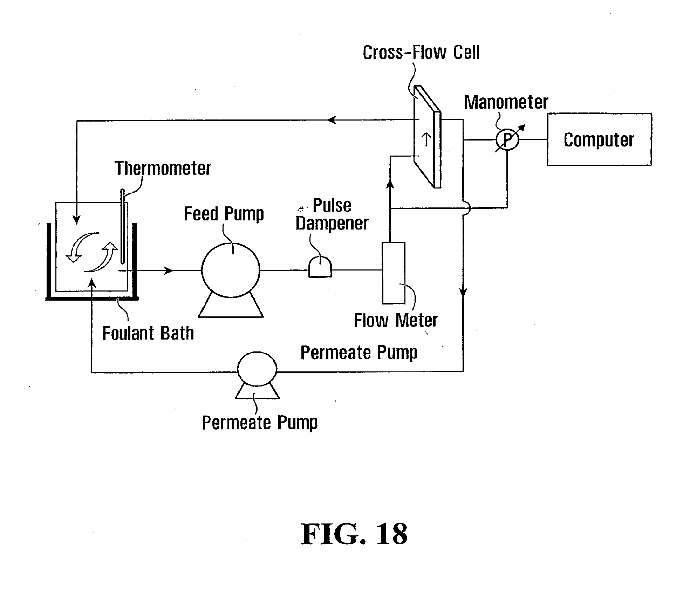

Critical flux measurements through the composite material were carried out after the samples had been washed with water, framed, dried for at least 30 min and re-wetted. As a standard procedure, a 3cm x 12cm sample was assembled into a cell supplied with feed pump; permeate pump, flowmeter and manometer as shown in Fig 18. In a first run, DI was run through the composite material for 30 minutes at different flow rates as controlled by the permeate pump. For each run both feed pump and permeate pump were calibrated. In the second run aqueous 1g/L bentonite was used as a foulant. Feed pump was set up at 790g/min (Re=1100), stirring speed was kept constant when bentonite applied as a foulant. The flow rate was increased in steps. The step size was 0.1 ml/min and step duration was 10 min. The transmembrane pressure (TMP) was recorded by manometer. The critical flux is defined as the point at which the TMP starts increasing under constant permeate flow. Average values of the maximum permeate flux before fouling and the minimum flux after fouling was taken as a critical flux.

*Dye adsorption experiment*

Dye adsorption studies were carried out with metanil yellow in dynamic conditions.

In an adsorption step, a composite material sample in a form of a single membrane disk of diameter 5.1 cm was mounted on a sintered grid of 3-5 mm thickness in a cell used for water flux measurements and described above. A 10 ppm metanil yellow solution in water was poured to the cell to give a 7 cm head over the composite material. This hydrostatic pressure of 7 cm was kept constant by further additions of the dye solution. The flow rate was measured by weighing the amount of permeate as a function of time. Typical values varied between 7 ml/min. Permeate samples were collected at 2.5 min intervals and analyzed by UV analysis at 435 nm. The composite material became orange in colour as it adsorbed the dye.

Wettablity tests were carried out by laying a composite material sample onto the surface of a deionized water contained in a dish and measuring the time taken for water to completely absorbed. Water absorption was accompanied by the composite material becoming translucent. The time taken for the composite material to be completely and evenly wetted with water was measured. A composite material that wetted completely in less than 1 second was said to be instantaneously wetted.

Example 1

This example illustrates a method of preparing a negatively charged pore-filled composite material having strong acid functionality.

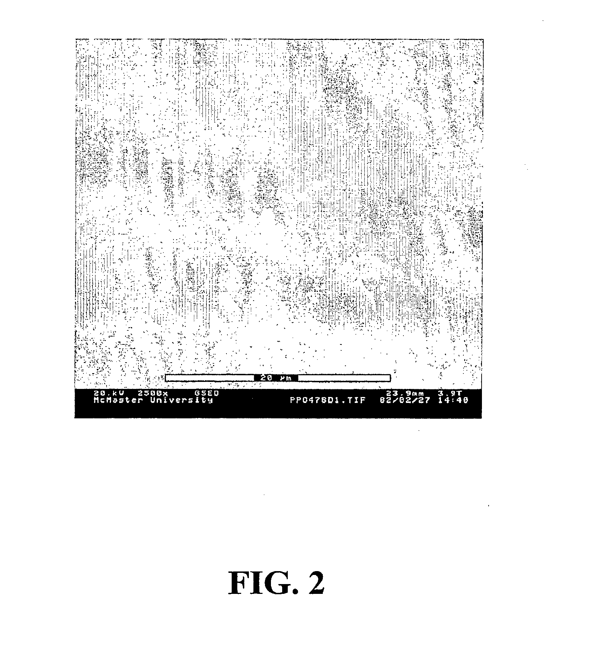

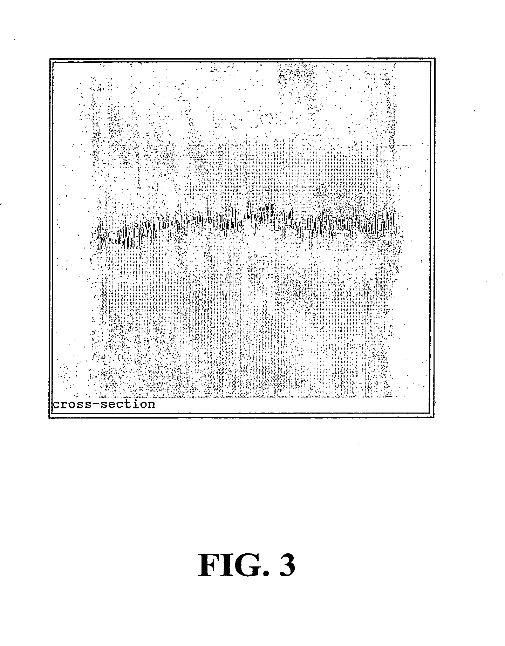

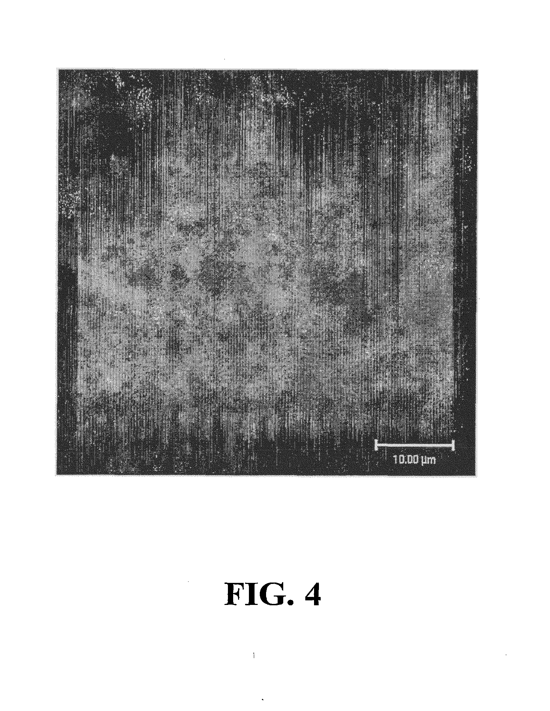

Sulfonated poly(2,6-phenylene-p-oxide) (SPPO) prepared as described above was characterised in terms of water content and ion-exchange capacity, which latter value can be correlated to sulfonation degree of the polymer gel. Thus, 2g SPPO was dissolved in 10g N,N'-dimethylformamide. A solution was cast via 0.47mm knife onto a glass plate. The polymer was dried in an oven for 4 hrs at 60°C. The polymer film thus obtained had a water content of 35.7% and an ion-exchange capacity of 2.3 mmol/$g_{dry}$, which corresponds to degree of sulfonation of 0.6. Thereafter, SPPO was used to prepare the pore-filled composite material. Thus, SPPO was dissolved in 1-methyl-2-pyrrolidinone to give a 25% w/w solution. The pore-filled material was prepared using the poly(propylene) PP1545-4 support and the general procedure described above. The resulting composite material was washed with water for 30 min. The mass gain of the resulting dried composite material was 125.4 wt%, the ion-exchange capacity was 1.1 mmol/$g_{dry}$, the water flux was 3.5 $\pm$0.3 kg/m$^2$h at 100 kPa and the Darcy permeability was $1.1 \times 10^{-18}$ m$^2$. The morphology of the composite material was examined using a variety of techniques, including ESEM, EDX and Confocal microscopy. The ESEM of the composite material surface is shown in Figure 2. As can be seen, the composite material has a dense surface. In order to ascertain the distribution of polyelectrolyte gel in this composite material, EDX analysis of sulphur in the cross section of the composite material was also carried out (Figure 3). As can be seen from Figure 3, the sulphur distribution across the composite material was relatively uniform. The surface morphology of the SPPO-gel filled composite material was also examined with laser fluorescence confocal microscopy. A fluorescence micrograph of the composite material is shown in Figure 4. The red colour observed in this image is due to the bound cationic fluorescent dye on the gel surface. The nascent composite material, however, is imaged as yellow because the green dye of the composite material is combined with the red dye in the gel exterior to form a composite yellow signal. There is a definite change in the morphology of the filled composite materials as compared to the nascent support member.

The SPPO-composite material showed a linear pressure-salt flux relationship and reasonable salt separation for 300 ppm NaCl. The data is presented in Table 1.

Table 1 Data on SPPO-composite material performance

| Pressure (kPa) | Salt Flux (kg/m$^2$ hr) | Rejection (%) |
|---|---|---|
| 100 | 2.9 $\pm$ 0.3 | 41.8 |
| 200 | 6.5$\pm$ 0.3 | 59.3 |
| 300 | 8.9$\pm$ 0.3 | 65.3 |
| 400 | 12.4$\pm$ 0.3 | 71.6 |
| 500 | 14.6$\pm$ 0.3 | 71.3 |

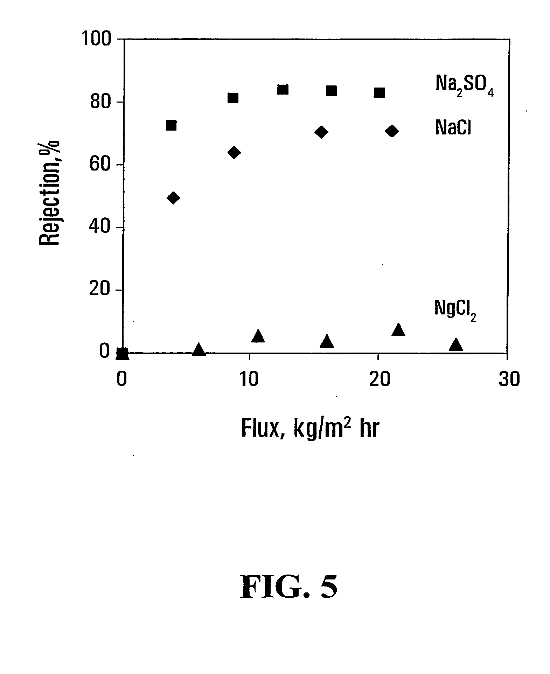

Figure 5 shows experimental data on SPPO-composite material performance for various salt separation including 300 ppm NaCl, 300 ppm $Na_2SO_4$ and 300 ppm $MgCl_2$.

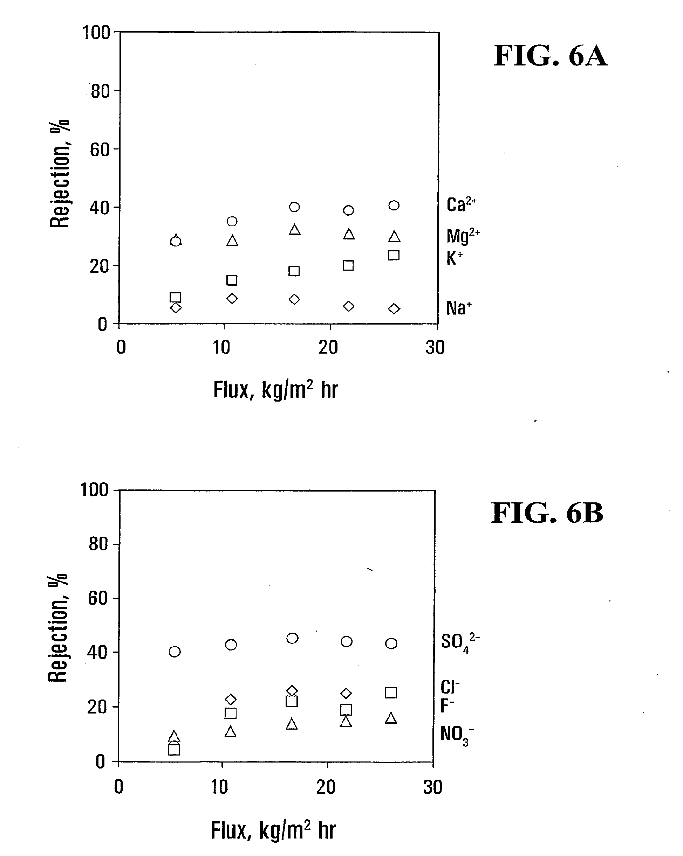

Figure 6a,b presents data on SPPO-composite material performance for tap water softening.

Example 2

This example illustrates a method for preparing a negatively charged pore-filled composite material having a strong acid functionality, and various polymer volume fraction and hydrodynamic permeabilities.

To prepare pore-filled composite materials with various polymer volume fractions, the SPPO described in Example 1 was used. SPPO was dissolved in 1-methyl-2-pyrrolidinone to give 7-25% w/w solutions. The pore-filled composite material was prepared using the poly(propylene) PP1545-4 support and the general procedure described above. The resulting composite materials were washed with water for 30 min. The mass gain of the resulting dried composite material was varied in the range of 63-125.4 wt%.

Table 2 Effect of mass gain on SPPO-composite material performance

| Mass Gain (%) | Polymer Volume Fraction | Water Uptake (%) | Water Flux (kg/m$^2$hr/100kPa) | Hydrodynamic Permeability (m$^2$) |
|---|---|---|---|---|
| 65.0 | 0.07 | 80.0 | 51.3 | $3.0 \times 10^{-17}$ |
| 75.0 | 0.09 | 77.0 | 20.0 | $1.0 \times 10^{-17}$ |
| 81.5 | 0.11 | 74.5 | 15.0 | $5.0 \times 10^{-18}$ |
| 100.0 | 0.12 | 73.8 | 6.1 | $2.5 \times 10^{-18}$ |
| 105.0 | 0.13 | 75.0 | 5.5 | $2.0 \times 10^{-18}$ |
| 111.5 | 0.14 | 73.0 | 5.1 | $1.7 \times 10^{-18}$ |
| 115.0 | 0.15 | 72.0 | 4.7 | $1.5 \times 10^{-18}$ |
| 125.4 | 0.17 | 69.0 | 3.5 | $1.1 \times 10^{-18}$ |

As can be seen from Table 2 depending on polymer concentration used for the preparation of pore-filled composite materials, materials with various mass gains, polymer volume fractions, and hydrodynamic permeability can be obtained. Change in the water flux up to 20 times can be achieved, which allows use of this kind of composite material in a variety of applications. It should be noted that volume change with respect of nascent composite material should not exceeded 20% for all composite materials tested.

Example 3

This example illustrates the stability of negatively charged pore-filled composite materials.

To test stability of pore-filled samples, SPPO described in Example 1 was used. SPPO was dissolved in 1-methyl-2-pyrrolidinone to give a 14.0 % w/w solution. The pore-filled material was prepared using the poly(propylene) PP1545-4 support and the general procedure described above. The resulting composite material was washed with water for 30 min. The mass gain of the resulting dried sample was 90.0 wt%.

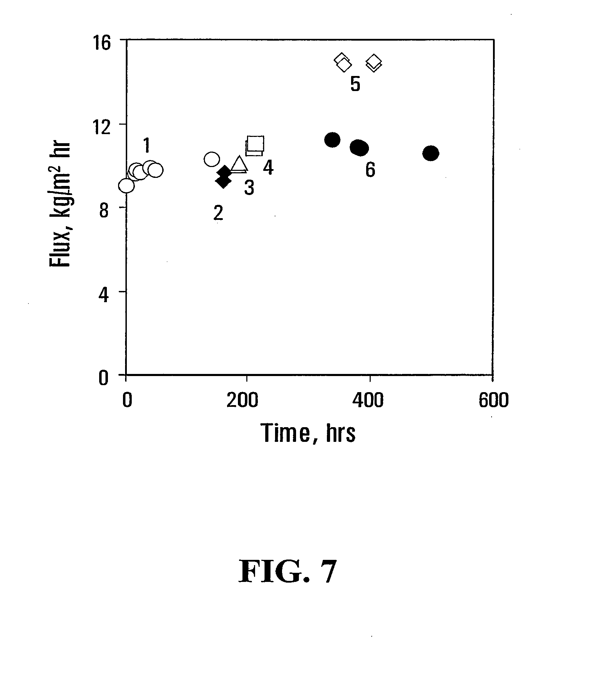

A composite material was placed in 0.01-1.0N NaOH and 0.01N HCl for 15 hrs following each time by washing with water and water flux measurement. After acid/base treatment the composite material was converted to the sodium form and water flux was measured again. Experimental data are presented in Figure 7. The composite material showed a very good stability over a 500 hrs testing period. Despite no attachments to the support member and no cross-linking, the gel polymer was not removed when subjected to hydraulic flow and retained a stable water flux for the sodium form of polymer over significant base/acid treatment.

Example 4

This example illustrates a method of preparing a negatively charged pore-filled composite material having a strong acid functionality.

Sulfonated poly(ether-ether-ketone) (SPEEK) with a medium degree of sulfonation prepared as described above was characterised in terms of water content and ion-exchange capacity, the latter value being correlated to the sulfonation degree of the gel polymer. Thus, 2g SPEEK was dissolved in 8g N,N'-dimethylformamide. A solution was cast via a 0.47mm knife onto a glass plate. The polymer was dried in an oven for 4 hrs at 60°C. The polymer film thus obtained had a water content of 25% and an ion-exchange capacity of 1.5 mmol/$g_{dry}$ that corresponds to degree of sulfonation of 0.8. Thereafter, SPEEK was used to prepare the pore-filled composite material. Thus, SPEEK was dissolved in 1-methyl-2-pyrrolidinone to give 25% w/w solution. The pore-filled material was prepared using the poly(propylene) PP1545-4 support and the general procedure described above. The resulting composite material was washed with water for 30 minutes. The mass gain of the resulting dried composite material was 127.1 wt%, the water flux was 3.7 $\pm$0.3 kg/m²h at 100kPa, and the data on salt flux and salt rejection for 300ppm NaCl are presented in Table 3.

Table 3 Data on SPEEK-composite material performance

| Pressure (kPa) | Salt Flux (kg/m²hr) | Salt Rejection (%) |
|---|---|---|
| 100 | 3.4±0.3 | 47.0 |
| 200 | 6.6±0.3 | 67.0 |
| 300 | 9.5±0.3 | 74.0 |
| 400 | 12.5±0.3 | 77.0 |
| 500 | 15.1±0.3 | 78.0 |

Example 5

This example illustrates effect of concentration of sulfonated poly(ether-ether-ketone) on composite material performance.

Sulfonated poly(ether-ether-ketone) (SPEEK) as described in Example 4 was used. The SPEEK solution was prepared in concentration range from 5% to 25% using N,N'-dimethylacetamide as a solvent. The pore-filled or pore-coated material was prepared using the poly(propylene) PP1545-4 support and the general procedure described above. The resulting composite material was washed with water for 30 minutes. Experimental data on water flux and salt rejection for 300ppm NaCl are presented in Table 4.

Table 4 Effect of SPEEK concentration on composite material performance

| SPEEK concentration (%) | Water Flux at 100 kPa (kg/m²hr) | Salt Rejection (%) |
|---|---|---|
| 25 | 4.1±0.3 | 48.0 |
| 20 | 15.4±0.3 | 22.3 |
| 15 | 55.1±0.5 | 14.4 |
| 12.5 | 890±5 | < 5.0 |
| 10 | 3546±27 | < 1.0 |
| 5 | 9423±40 | < 1.0 |

Example 6

This example illustrates performance of sulfonated poly(ether-ether-ketone) coated composite material and its protein binding.

Sulfonated poly(ether-ether-ketone) (SPEEK) as described in Example 4 was used. Thereafter, SPEEK was used to prepare the pore-coated composite material. Thus, SPEEK was dissolved in N,N'dimethylacetamide to give 10 and 5% w/w solutions. The pore-coated material was prepared using the poly(propylene) PP1545-4 support and the general procedure described above. The resulting composite material was washed with water for 30 minutes. The mass gain of the resulting dried composite materials was 21.7 and 18.5 wt%, the water flux was 3546±27 and 9423±40 kg/m²h at 100kPa respectively.

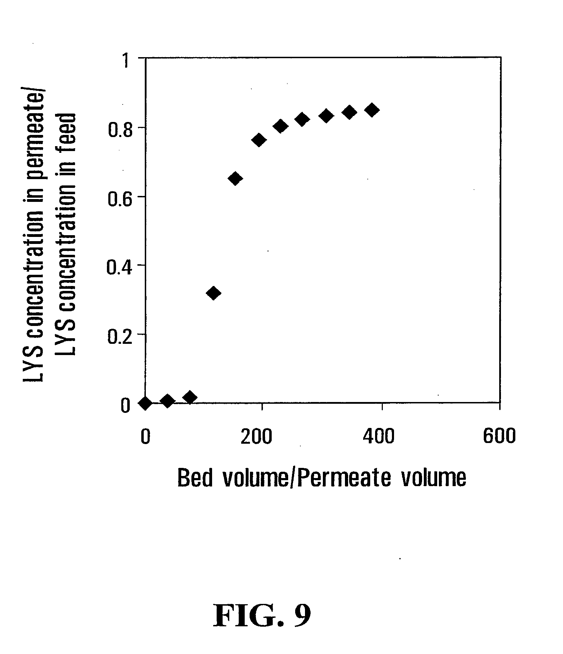

The protein (lysozyme) absorption/desorption characteristics of the composite material were examined using the general procedure for a single membrane disk outlined earlier. The concentration of the protein used in this experiment was 0.5 g/L in a 10 mM MES buffer at pH 5.5. The flow rate of adsorption experiment was 5 ml/min. A plot of the concentration of lysozyme in permeate versus the volume of permeate is shown in Figure 9. Composite materials showed a breakthrough lysozyme binding capacity of 25.0 and 19.5 mg/mL respectively for composite materials prepared from 10 and 5% (w/w) SPEEK. A desorption experiment with a buffer solution containing 1M NaCl indicated that the recovery of protein was 87 and 85% respectively.

Example 7

This example illustrates a method of preparing a negatively charged composite material having a strong acid functionality.

Sulfonated poly(ether-ether-ketone) (SPEEK) with high degree of sulfonation prepared as described above was characterised in terms of water content and ion-exchange capacity, the later value being correlated to the sulfonation degree of gel polymer. Thus, 2g SPEEK was dissolved in 8g N,N'-dimethylformamide. A solution was cast via a 0.47mm knife onto a glass plate. The polymer was dried in an oven for 4 hrs at 60°C. The polymer film thus obtained had water content of 37% and an ion-exchange capacity of 2.1 mmol/$g_{dry}$ that corresponds to degree of sulfonation of 0.9. Thereafter, SPEEK was used to prepare the composite material. Thus, SPEEK was dissolved in N,N'-dimethylacetamide to give 20% w/w solution. 70 parts of solution thus obtained were mixed with 30 parts of 20% w/w poly(ethersulfone)(PES) in N,N'-dimethylacetamide. The pore-filled material was prepared using the poly(propylene) PP1545-4 support and the general procedure described above. The resulting composite material was placed in water for 30 minutes. Experimental data on water flux and 100 ppm PEG 10 000 rejection are presented in Table 5.

Table 5 Data on SPEEK/PES-composite material performance

| Polymer concentration (%) | Water Flux at 100 kPa (kg/m²hr) | 100 ppm PEG 10 000 rejection (%) |
|---|---|---|
| 20 | 85.5±0.5 | 6.9 |
| 15 | 1221±10 | 5.7 |
| 10 | 4688±35 | 1.1 |

Example 8

This example illustrates a method of preparing a negatively charged pore-filled composite material having a strong acid functionality that can be dried.

To prepare pore-filled composite materials with humectant, the SPEEK described in Example 4 was used. SPEEK was dissolved in 1-methyl-2-pyrrolidinone to give 25% w/w solution. The pore-filled composite material was prepared using the poly(propylene) PP1545-4 support and the general procedure described above. The resulting composite material was washed with water for 30 min and placed in to 50% w/w glycerol solution in water for 20 min. Thereafter, the sample was air dried for 48 hrs. Then, sample was washed with water for 20 min and tested for water flux. Composite material showed the water flux of 3.8 ±0.3 kg/m²h at 100kPa. The mass gain of the resulting dried composite material was 129 wt%.

Example 9

This example illustrates separation of humic acid by using of a negatively charged pore-filled material.

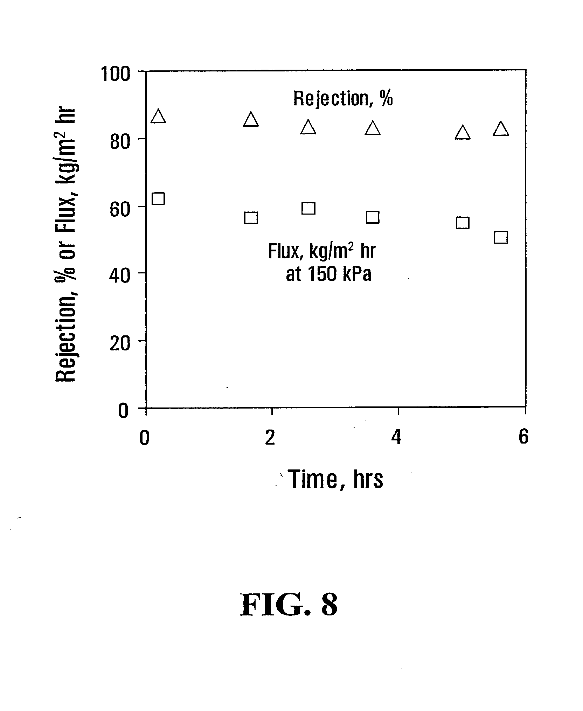

To test separation of humic acid by a pore-filled material of the present invention, a SPEEK polymer described in Example 4 was used. SPEEK was dissolved in 1-methyl-2-pyrrolidinone to give a 15.0 % w/w solution. The pore-filled composite material was prepared using the poly(propylene) PP1545-4 support and the general procedure described above. The resulting composite material was washed with water for 30 min. The mass gain of the resulting dried composite material was 90.0 wt%. The composite material was used for separation of humic acid as described above. Experimental results, displaying solute flux and humic acid rejection over a period of 6 hrs, are presented in Figure 8. As can be seen from Figure 8, solute flux reduces in the range of 7-10% at the relatively high rejection of humic acid of 80%. The composite material sample was regenerated by soaking in distilled water for 24 hrs and showed tap water flux of 64.0 kg/m²hr at 150 kPa, which is similar to the original value before separation of humic acid.

Example 10

This example illustrates a method of preparing a negatively charged pore-filled composite material having a strong acid functionality.

Sulfonated poly(ether sulfone) (SPES) prepared as described above was characterised in terms of water content and ion-exchange capacity, which latter value is correlated to the sulfonation degree of the gel polymer. Thus, SPES was dissolved in N,N'-dimethylformamide to give a 20% wt solution. The solution was cast via 0.47mm knife onto a glass plate. The polymer was dried in an oven for 4 hrs at 60°C. The polymer film thus obtained showed water content of 15% and ion-exchange capacity of 1.2 mmol/$g_{dry}$, which corresponds to a degree of sulfonation of 0.4. Thereafter, SPES was used to prepare the pore-filled composite material. Thus, SPES was dissolved in 1-methyl-2-pyrrolidinone to give a 20% w/w solution. The pore-filled material was prepared using a poly(propylene) PP1545-4 support and the general procedure described above. The resulting composite material was washed with water for 30 min. The mass gain of the resulting dried composite material was 115.5 wt%, the water flux was 6.2 $\pm$0.3 kg/m$^2$h at 100kPa, and the results regarding salt flux and rejection for 300ppm NaCl are presented in Table 6.

Table 6 Data on SPES-composite material performance

| Pressure (kPa) | Salt Flux (kg/m$^2$hr) | Salt Rejection (%) |
| --- | --- | --- |
| 100 | 5.9$\pm$0.3 | 40.0 |
| 200 | 12.6$\pm$0.3 | 53.7 |
| 300 | 19.1$\pm$0.3 | 68.2 |
| 400 | 26.5$\pm$0.3 | 67.5 |
| 500 | 32.1$\pm$0.3 | 66.7 |

Example 11

This example illustrates a method of preparing a negatively charged pore-filled composite material having a strong acid functionality.

Sulfonated polystyrene (SPSt) prepared as described above was characterised in terms of water content and ion-exchange capacity, which latter value is correlated to the sulfonation degree of the gel polymer. Thus, SPSt was dissolved in N,N'-dimethylformamide to give a 20% wt solution. A solution was poured into a petri dish to allow solvent evaporation. The polymer was dried in an oven for 8 hrs at 60°C. The polymer film thus obtained showed water content of 37.5% and an ion-exchange capacity of 2.4 mmol/$g_{dry}$, which corresponds to degree of sulfonation of 0.5. Thereafter, SPSt was used to prepare the pore-filled composite material. Thus, SPSt was dissolved in 1-methyl-2-pyrrolidinone to give a 20% w/w solution. The pore-filled material was prepared using a poly(propylene) PP1545-4 support and the general procedure described above. The resulting composite material was washed with water for 30 minutes. The mass gain of the resulting dried composite material was 117.8 wt%, with an ion-exchange capacity of 1.1 mmol/$g_{dry}$, and a water flux was 5.3 $\pm$0.3 kg/m$^2$h at 100kPa. The on salt flux and salt rejection results for 300ppm NaCl are presented in Table 7.

Table 7 Data on SPSt-composite material performance

| Pressure (kPa) | Salt Flux (kg/m$^2$hr) | Salt Rejection (%) |
| --- | --- | --- |
| 100 | 5.0$\pm$0.3 | 41.0 |
| 200 | 11.0$\pm$0.3 | 55.0 |
| 300 | 17.1$\pm$0.3 | 60.0 |
| 400 | 21.4$\pm$0.3 | 63.0 |
| 500 | 26.0$\pm$0.3 | 65.0 |

Example 12

This example illustrates a method of preparing a positively charged pore-filled composite material having a strong basic functionality.

Aminated poly(vinylbenzyl chloride) (APVB) prepared as described above was characterised in terms of water content and ion-exchange capacity, which latter value is related to the amination degree of the gel polymer. Following the amination reaction, the polymer solution was poured into a Petri dish to evaporate the solvent at 60°C. The polymer film obtained was washed with water, dried, and used for the composite material preparation. The polymer film displayed water content of 43.7% and an ion-exchange capacity of 2.5 mmol/$g_{dry}$, which corresponds to a degree of amination of 0.6. Thereafter, the same polymer solution was used to prepare the pore-filled composite material. The pore-filled material was prepared using a poly(propylene) PP1545-4 support and the general procedure described above. The resulting composite material was washed with water for 30 minutes. The mass gain of the resulting dried composite material was 107.1 wt%, and the water flux was 16.5 $\pm$0.3 kg/m$^2$h at 100kPa. The results for salt flux and salt rejection for 300ppm NaCl are presented in Table 8.

Table 8 Data on APVB-composite material performance

| Pressure (kPa) | Salt Flux (kg/m$^2$hr) | Salt Rejection (%) |
|---|---|---|
| 100 | 15.3$\pm$0.3 | 37.1 |
| 200 | 30.3$\pm$0.3 | 30.5 |
| 300 | 46.5$\pm$0.3 | 28.2 |
| 400 | 61.8$\pm$0.3 | 27.5 |
| 500 | 77.1$\pm$0.3 | 23.6 |

Example 13

This example illustrates a method of preparing a polyelectrolyte complex pore-filled material of the present invention.

Pore-filled composite material was prepared as described in Example 12, except that the gelation step was carried out with 5% w/w poly(styrenesulfonic acid). Thereafter, the composite material was washed with water for 30 min.

The mass gain of the resulting dried composite material was 120.5 wt%, and the water flux was 6.3 $\pm$0.3 kg/m$^2$h at 100kPa. The results for salt flux and salt rejection for 300ppm NaCl are presented in Table 9.

Table 9 Data on performance of composite material filled with polyelectrolyte complex

| Pressure (kPa) | Salt Flux (kg/m$^2$hr) | Salt Rejection (%) |
|---|---|---|
| 100 | 5.8$\pm$0.3 | 34.6 |
| 200 | 12.8$\pm$0.3 | 54.7 |
| 300 | 19.3$\pm$0.3 | 53.3 |
| 400 | 24.5$\pm$0.3 | 52.9 |
| 500 | 31.6$\pm$0.3 | 51.0 |

Example 14

This example illustrates a method of preparing a negatively charged pore-filled hollow fibre material having a strong acid functionality.

Sulfonated poly(phenylene oxide) (SPPO) prepared and characterised as described in Example 1 was used to prepare a pore-filled hollow fibre composite material. Thus, SPPO was dissolved in 1-methyl-2-pyrrolidinone to give a 14% w/w solution. The pore-filled material was prepared using the poly(propylene) Accurel Q3/1 hollow fibre support member. The composite material was prepared by dipping the porous hollow fibres in 14% w/w SPPO for 15 min. Thereafter, the support material was immersed in water for 30 min to precipitate the gel polymer, and the composite material was washed with water. The mass gain of the resulting dried composite material was 45.0 wt%, and the water flux was 4.2 $\pm$0.3 kg/m$^2$h at 100kPa. The composite material showed a linear pressure-salt flux relationship and reasonable salt separation for 300 ppm NaCl. The results are presented in Table 10.

Table 10 Data on performance of hollow fibre composite material filled by dipping into polymer solution

| Pressure (kPa) | Salt Flux (kg/m$^2$ hr) | Rejection (%) |
|---|---|---|
| 100 | 3.9 $\pm$ 0.3 | 35.7 |
| 200 | 8.1 $\pm$ 0.3 | 47.3 |
| 300 | 12.3 $\pm$ 0.3 | 61.1 |
| 400 | 16.1 $\pm$ 0.3 | 64.6 |
| 500 | 20.0 $\pm$ 0.3 | 67.4 |

Example 15

This example illustrates a method of preparing a negatively charged pore-filled hollow fibre composite material having a strong acid functionality.

The filled hollow fibre composite material was prepared as described in Example 14, except that the porous hollow fibre support member was filled with 14 % w/w under vacuum, instead of simply by dipping. Vacuum was applied for 10 minutes. Thereafter, the support member was immersed in water for 30 min to gel the polymer. The resulting composite material was washed with water. The mass gain of the resulting dried composite material was 63.0 wt%, and the water flux was 1.3 $\pm$0.3 kg/m$^2$h at 100kPa. The composite material showed a linear pressure-salt flux relationship and reasonable salt separation for 300 ppm NaCl. The results are presented in Table 11.

Table 11 Data on performance of hollow fibre composite material filled with polymer solution by vacuum

| Pressure (kPa) | Salt Flux (kg/m$^2$ hr) | Rejection (%) |
|---|---|---|
| 100 | 0.8 $\pm$ 0.3 | 27.7 |
| 200 | 1.7 $\pm$ 0.3 | 44.5 |
| 300 | 2.5 $\pm$ 0.3 | 52.1 |
| 400 | 3.3 $\pm$ 0.3 | 65.3 |
| 500 | 4.1 $\pm$ 0.3 | 68.5 |

Example 16

This example illustrates a method of preparing pore-filled composite material having a weak basic functionality.
Chitosan was dissolved in 1% (w/w) acetic acid to give a 3% w/w solution. The pore-filled material was prepared using the poly(propylene) PP1545-4 support and the general procedure described above. The resulting composite material was placed in 0.1N NaOH for 20 min to gel the chitosan within the porous support member. Then, composite material was washed with water for 20 min. The mass gain of the resulting dried composite material was 23.1 wt%, the water flux was 390$\pm$5 kg/m$^2$h at 100kPa. Composite material showed instant wettability after 2 hrs drying in an oven at 70°C.

Example 17

This example illustrates effect of concentration of a poly(ethylene-co-vinyl alcohol) initial solution on composite material performance.
Poly(ethylene-co-vinyl alcohol) was dissolved in N,N'-dimethylacetamide to give solutions with concentration in the range of 2.5 to 20% (w/w). The pore-filled and pore-coated materials were prepared using a poly(propylene) PP1545-4 support and the general procedure described above. The resulting composite material was placed with water for 20 minutes. Composite materials obtained were characterized for water flux at 100 kPa and 100 ppm PEG 10 000 rejection. Experimental data are presented in Table 12.

Table 12 Effect of EVAL concentration on composite material performance

| EVAL concentration (%) | Water Flux at 100 kPa (kg/m$^2$ hr) | 100 ppm PEG 10 000 Rejection (%) |
|---|---|---|
| 20 | 183.4$\pm$1.8 | 7.3 |
| 15 | 2214$\pm$20 | 5.6 |
| 10 | 6865 $\pm$ 50 | 1.0 |
| 5 | 13357$\pm$ 70 | 0.5 |
| 2.5 | 17083$\pm$ 100 | 0.1 |

Example 18

This example illustrates a method of preparing a negatively charged pore-filled composite material based on a AMPS/N-tBAm copolymer.

A pore-filled composite material was prepared according to the general procedure described earlier using a AMPS/N-tBAm copolymer and a PP5 support. The resulting composite material was washed with deionized water. The mass gain of the resulting dried composite material was 150.7%, the water flux was 3.59kg/m$^2$.h at 100kPa, and its thickness was 130 $\mu$m. The data on salt flux and salt rejection for 5mM NaCl are presented in Table 13.

Table 13 NaCl separation with a AMPS/NtBAm copolymer comprising composite material

| Pressure (kPa) | Flux (kg/m$^2$.hr) | Salt Rejection (%) |
|---|---|---|
| 100 | 2.29 | 36.9 |
| 200 | 4.29 | 52.3 |
| 300 | 6.15 | 57.3 |
| 400 | 8.77 | 58.2 |
| 500 | 10.99 | 60.0 |

Example 19

This example illustrates a method of preparing a negatively charged pore-coated composite material based on a AMPS/N-tBAm copolymer.

2.0g of a AMPS/N-tBAm copolymer solution was mixed with 4.0g absolute ethanol in equivalent amount to give a dilute solution. A pore-filled material was prepared according to the general procedure described earlier using the diluted copolymer solution and a PP5 support. The resulting composite material was washed with deionized water. The mass gain of the resulting dried composite material was 29.6%, and the water flux was 2652$\pm$40 kg/m$^2$.h at 100kPa.

Example 20

This example illustrates a method of preparing a negatively charged pore-filled composite material by *in-situ* polymerization of AMPS and NtBAm.

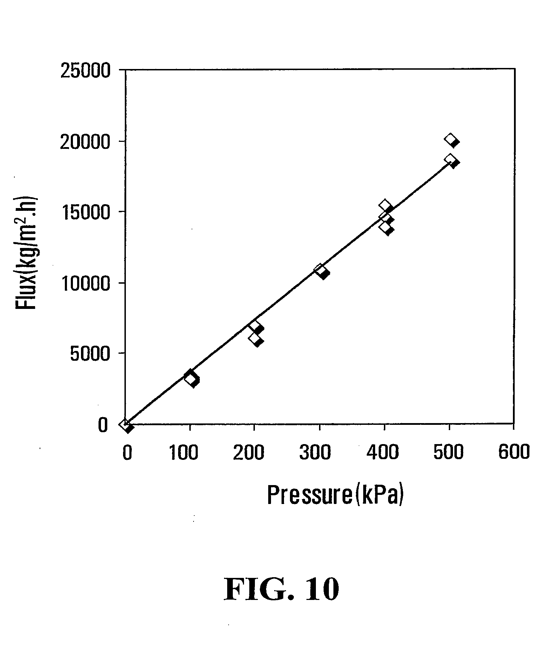

A monomer solution was prepared by mixing 3.0042g NtBAm, 0.2591g AMPS, 0.0208g Irgacure®2959, and 11.9080g methanol. The solution was stirred to obtain a clear solution. A PP5 support member was soaked in the solution for 2 minutes and then sandwiched between two polyester films. The "sandwich" was rolled tightly to remove excessive solution. The "sandwich" was then irradiated for 140 minutes in a photoreactor. Upon completion of the irradiation, the pore-filled composite material was immersed in water to carry out polymer precipitation. The composite material was then thoroughly washed with water. The mass gain of the resulting composite material was 107.3%. The relationship between water flux of the composite material and applied pressure are shown in Figure 10.

Example 21

This example illustrates a method of preparing a neutral pore-filled composite material based on a NVF/NtBAm copolymer.

A pore-filled material was prepared according to the general procedure described earlier using a copolymer NVF/NtBAm copolymer solution and a PP5 support. The resulting composite material was washed with deionized water. The mass gain of the resulting dried composite material was 111.4%, and the water flux was 3051$\pm$75kg/m$^2$.h at 100kPa.

Example 22

This example illustrates a method of preparing a pore-coated composite material based on GMA/NVF/NtBAm copolymer containing a reactive functional group.

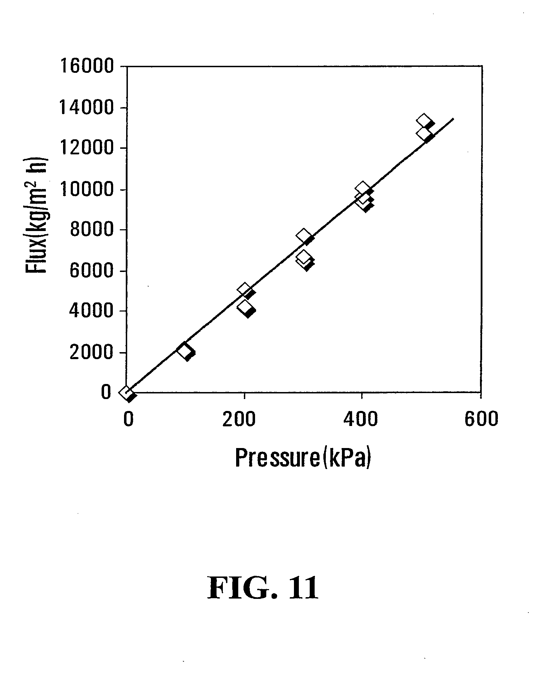

A pore-filled composite material was prepared according to the general procedure described earlier using a GMA/NVF/NtBAm copolymer solution and a PP5 support. The resulting composite material was washed with deionized water. The mass gain of the resulting dried composite material was 122.4%, and the composite material thickness was 119$\mu$m. The relationship between water flux of the composite material and applied pressure are shown in Figure 11.

Example 23

This example illustrates a method of preparing a pore-coated composite material containing a reactive group.

2.0g of a GMA/NVF/N-tBAm copolymer solution was mixed with 2.0g absolute ethanol and 2.0g 1,4-dioxane to give a dilute solution. A pore-coated material was prepared according to the general procedure described earlier using the diluted copolymer solution and a PP5 support. The resulting composite material was washed with deionized water. The mass gain of the resulting dried composite material was 46%, and the water flux was $16,970 \pm 562 kg/m^2.h$ at 100kPa.

Example 24

This example illustrates the effect of the temperature of water in a precipitation bath on the wettability of an EVAL coated composite material.

A porous poly(propylene) 1545-4 support member was placed between two polyethylene liners, and a 2.5% EVAL (ethylene content of 27 mole%) solution was applied for 30 min at 75°C. The composite material, along with the liners, was passed between rollers to press the solution into the pores of the support member and squeeze out excess solution. The support member was then removed from the liners, dipped in a deionized water bath maintained at room temperature for coating of EVAL to take place. The same process was repeated with a deionized water bath maintained at 60°C. The composite materials were removed from the water bath after a few minutes, the excess surface water removed with paper. The composite material samples were then supported on a clean glass plate with their edges fixed with adhesive tape and dried in an oven at 75°C for 30 minutes. The samples were then removed from the oven and detached from the glass plate. The wettability of the samples was checked by floating them on a water surface and measuring the time necessary to rehydrate them. The results are shown in Table 14.

able 14 Effect of the precipitation temperature on composite material wettability

| Coating type | Precipitation temperature (DI water) (10 min) | Washing temperature (DI water) (10x2 min) | Wetting time (minutes) |
|---|---|---|---|
| 2.5% EVAL in dimethylacetamide | 25°C | 25°C | 20 |
| | 60°C | 60°C | 3 |
| 2.5% EVAL in Isopropanol :water ::60:40 (v/v) | 25°C | 25°C | 11 |
| | 60°C | 60°C | 2.5 |

The results show that it is beneficial to precipitate EVAL at higher temperatures with water in order to obtain more wettable composite materials.

Example 25

This example illustrates the effect of autoclaving on the wettability of EVAL coated composite materials.

Pore coated composite materials were prepared following the procedure described in Example 24 using porous poly(propylene) 1545-4 support members. The samples where then autoclaved in water or in air.

For wet autoclaving, the samples were wetted with water and kept suspended in a pool of water in a beaker. The beaker was loosely capped with aluminium foil. Autoclaving was carried out at 121°C for 20 minutes and the samples were then dried in an oven for 30 minutes at 75°C. Their wettability was then checked by floating them on a water surface.

For dry autoclaving, the samples were oven dried in a dry beaker loosely capped with aluminium foil. Autoclaving was carried out at 121°C for 20 minutes. Dry autoclaving yielded unwettable composite materials, as shown in Table 15.

Table 15 Effect of wet autoclaving on composite material wettability

| Coating type | Precipitation temperature (DI water) (10 min) | Washing temp. (DI water) (10x2 min) | Wetting time (min) | |
|---|---|---|---|---|
| | | | Original composite material | Wet autoclaved composite material |
| 2.5%EVAL in Dimethylacetamide | 25°C | 25°C | 20 | 8 |
| | 60°C | 60°C | 3 | 2 |
| 2.5% EVAL in Isopropanol/water 60:40 (v/v) | 25°C | 25°C | 11 | immediate |
| | 60°C | 60°C | 2.5 | immediate |

The results demonstrate that the EVAL coated composite materials can be autoclaved, and that wet autoclaving improves the wettability of the composite material.

Example 26

This example illustrates the effect of treatment of EVAL coated composite materials with boiling water.

Pore coated composite materials were prepared following the procedure described in Example 24 using porous poly(propylene) 1545-4 support members. The samples were then treated by immersing them in boiling water for 30 minutes. The samples were then dried in an oven at 75°C for 30 minutes and their wettability checked by floating them on a water surface. The wettability results are shown in Table 16.

Table 16 Effect of boiling water treatment on composite material wettability

| Coating type | Precipitation temperature (DI water) (10 min) | Washing temp. (DI water) (10x2 min) | Wetting time (min) | |
|---|---|---|---|---|
| | | | Original composit e material | Composite material treated with boiling water |
| 2.5%EVAL in Dimethylacetamide | 25°C | 25°C | 20 | 10 |
| | 60°C | 60°C | 3 | 3 |
| 2.5% EVAL in Isopropanol/water 60:40 (v/v) | 25°C | 25°C | 11 | 0.18 |
| | 60°C | 60°C | 2.5 | Immediate |

These results show both the stability of the EVAL coated composite materials to extraction with boiling water as well as a significant improvement to wettability with such a treatment.

Example 27

This example illustrates the amount leachables present in EVAL coated composite materials.

Pore coated composite materials were prepared following the procedure described in Example 24 using porous poly(propylene) 1545-4 support members. The leachables test was carried out using the procedure described in International Publication WO 03/008011 A1.

A 25cm$^2$ piece of each sample was cut and singly placed for 16 hours in a closed container containing measured volume of DI water. The water samples were then tested to determine their total organic carbon (TOC) using a TOC analyser. The TOC values were corrected by subtracting the TOC value of the background (DI water). The results are shown in Table 17.

Table 17 Extractable from EVAL coated composite materials prepared under different conditions

| No. | Coating type | Precipitation temperature (DI water) (10 min.) | Washing temp. (DI water) (10x2 min) | TOC $\mu$g/cm$^2$ |
|---|---|---|---|---|
| 1 | 2.5% EVAL in Dimethylacetamide | 25°C | Nil | 6.93 |
| 2 | | | 25°C | 1.89 |
| 3 | | | 60°C | 1.34 |
| 4 | | 60°C | Nil | 2.37 |
| 5 | | | 60°C | 0.76 |
| 6 | 2.5% EVAL in DMSO/Ethanol 70/30 (v/v) | 25°C | 25°C | 3.21 |
| 7 | | | 60°C | 2.9 |
| 8 | 2.5% EVAL in DMSO/Acetone 60/40 (v/v) | 25°C | 25°C | 5.9 |
| 9 | | | 60°C | 3.87 |

These results show that it is possible to prepare EVAL coated composite materials that have very low leachable levels.

Example 28

This example illustrates the effect of ethylene content of EVAL samples on wettability of coated composite materials.

Pore coated composite materials were prepared following the procedure described in Example 24 using porous poly(propylene) 1545-4 support members. Two EVAL samples, one with an ethylene content of 27 mole % and another with an ethylene content of 32 mole % were used. A solution of 2.5% EVAL in dimethylacetamide was used for coating. The procedure used was the same as that described in Example 24. The results are shown in Table 18.

Table 18 Effect of EVAL gels having varying ethylene contents on composite material wettability

| EVAL sample | Precipitation temperature (DI water) (10 min.) | Washing temp. (DI water) (10x2 min) | Wetting time (minutes) |
|---|---|---|---|
| 27 mole % ethylene content | 25°C | 25°C | 20 |
| | 60°C | 60°C | 3.5 |
| 32 mole % ethylene content | 25°C | 25°C | 60 |
| | 60°C | 60°C | 20 |

The results indicate that use of an EVAL polymer with a higher vinyl alcohol content leads to composite materials that more readily wet when placed in water.

Example 29

This example illustrates the control of coating gel thickness achieved through variations in gel polymer concentration.

A series of composite materials were prepared with varying concentrations of EVAL and SPEEK gel polymers on a PP5 support member having the characteristics shown in Table 19.

Table 19 Characteristics of the PP5 support member

| | |
|---|---|
| Pore radius in support member $r_o$ (m) | 2.56E-07 |
| Support member porosity $e_o$ | 0.85 |
| Support member permeability $k_o$ ($m^2$) | 6.98E-15 |
| Composite material thickness (m) | 1.23E-04 |
| Flux at 100 kPa ($kg/m^2h$) | 22,887 |
| Calculated number of cylindrical pores ($cm^{-3}$) | 3.35E+10 |
| Mass of 1 $cm^3$ of support member (g) | 0.1365 |

For each composite material sample prepared, water flux, composite material thickness, and porosity were measured, and a pore radius value was calculated from permeability using the Hagen-Pouiseuille equation

$$r_p = \left(\frac{8k}{\varepsilon}\right)^{0.5}$$

where e is the porosity. The number of cylindrical pores in the support member was calculated from porosity and pore radius assuming that the length of a pore is equal to the support material thickness.

The partial specific volume of EVAL 27, $v_2 = 0.75$ $cm^3/g$ was calculated from the group contribution according to Durchschlag and Zipper (Durchschlag,H.; Zipper,P., Calculation of the partial volume of organic compounds and polymers, Progress in Colloid and Polymer Science, vol. 94 (1994) 20-39.). It has been assumed that the pores of the support member become coated with precipitated EVAL so that the number of pores remains unchanged and that composite material porosity decreases with coating by the coat volume.

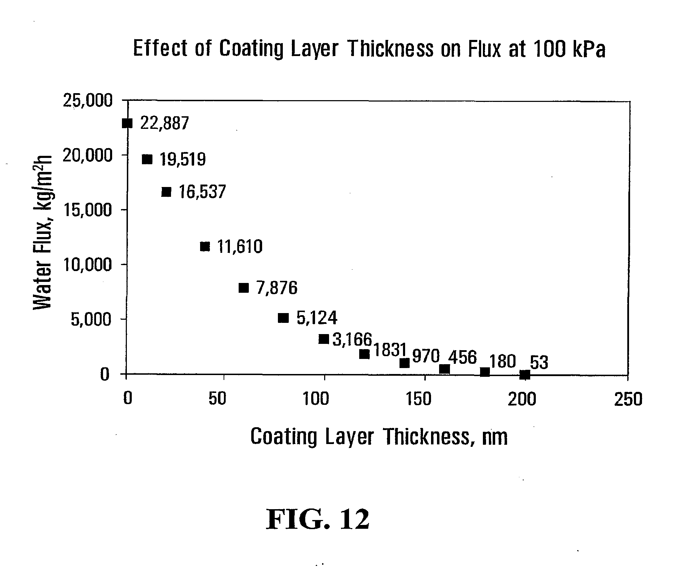

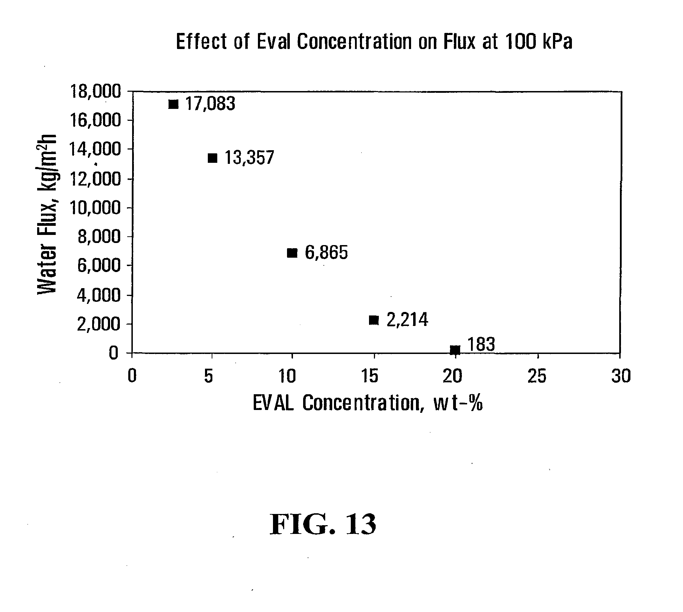

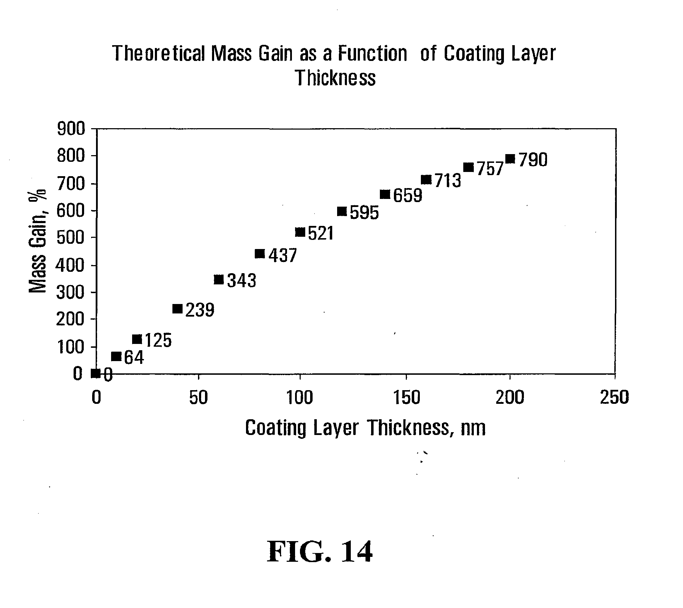

The effect of coating thickness on flux was simulated through the changes of pore radius and porosity, and the results of these simulations are presented in Figure 12. These simulated results were then compared to experimental data obtained with a series of EVAL-coated PP5 composite materials, the results of which are presented in Figure 13. A comparison of Figures 12 and 13 shows that a flux of about 180 kg/m$^2$h obtained with 20 wt-% coating solution would require a coat of a thickness of 180nm, and that the composite material porosity would be reduced to 8 vol-%. Calculations of the theoretical mass gains required to achieve the above characteristics are presented in Figure 14. From these calculations, it can be seen that the mass gain required for a 180nm coating thickness is not readily achievable, since the mass gain that can be obtained with a 25 wt-% solution is only about 155%. The results of these calculations do not exclude coat formation but suggests that the coat would have to be porous or gel like.

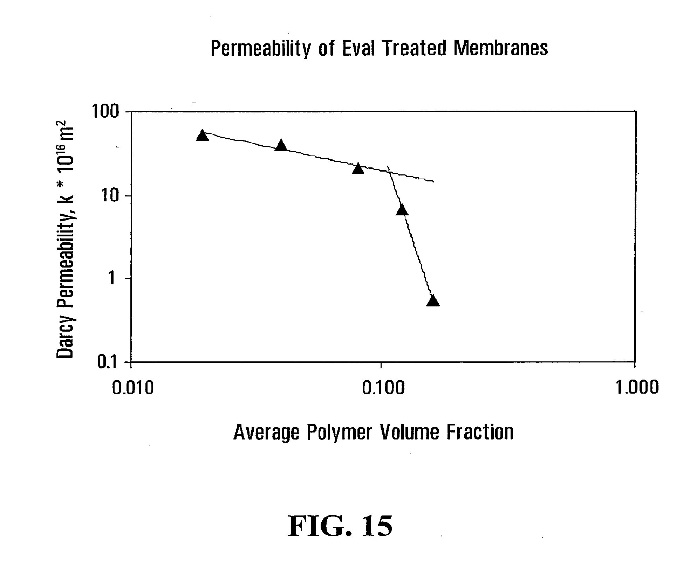

Following the above calculations, water permeability was measured as a function of the average polymer volume fraction of EVAL 32 in the pores. The results for these measurements are presented in Figure 15. The data obtained suggests a presence of two different regions of polymer volume fractions differing in permeability. Typically, permeability of a gel is a power function of the polymer volume fraction of a type:

$$k = A\phi^{-\nu}$$

where A is a numerical parameter, $\phi$ is the polymer volume fraction, and $v$ is the exponent of the power equation. When plotted in log-log scale, the equation should be represented by a straight line as shown, for example, in papers by Kapur et al. (Kapur,V.; Charkoudian,J.; Kessler,S.B.; Anderson, J.L., Hydrodynamic permeability of hydrogels stabilized within porous membranes, Industrial and Engineering Chemistry Research, vol. 35 (1996) 3179-3185) or by Mika and Childs (Mika, A.M.; Childs, R.F., Calculation of the hydrodynamic permeability of gels and gel-filled microporous membranes, Industrial and Engineering Chemistry Research, vol. 40 (2001) 1694-1705).

As shown in Figure 15, at lower polymer volume fractions, for example below about 0.1, the effect of increased polymer mass (average polymer volume fraction) in the pores of the support member is very small. This is indicated by the small value of the exponent $v$ (0.63). When, however, the average polymer volume fraction exceeds 0.1, the drop in permeability is more pronounced, with the exponent of about 8.5.

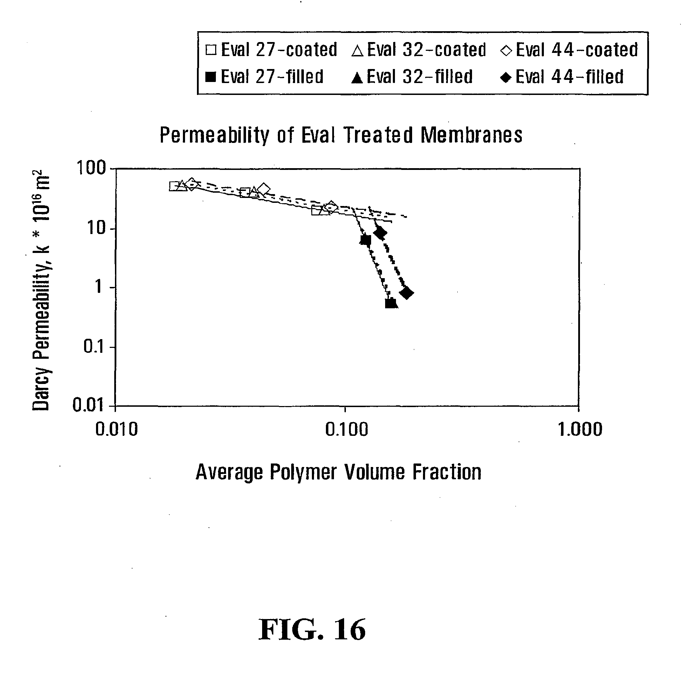

A similar trend was observed with three EVAL gel polymers differing by the molar fraction of the ethylene content (EVAL 27 and EVAL 44). The results obtained for these three gel polymers are presented in Figure 16. As it can be seen in Figure 16, the pattern of discontinuity is repeated with all three polymers and while there is small difference between EVAL 27 and EVAL 32 containing composite materials, the permeability of those containing EVAL 44 is markedly higher, particularly in the pore-filled range. Figures 15 and 16 show that there is a transition from pore coating to pore filling. The polymer volume fraction for the transfer from coated to filled state is almost the same for EVAL 27 and EVAL 32, but shifted to higher values with EVAL 44.

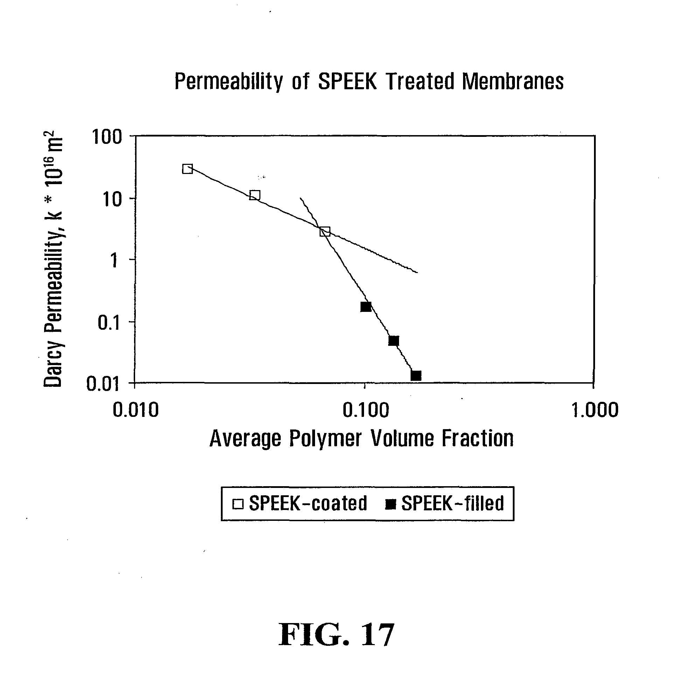

A similar transition is also seen with other gel polymers. Figure 6 displays permeability data obtained with sulfonated PEEK (SPEEK) having an 80 mol-% sulfonation. The partial specific volume of this polymer was calculated in a similar way to that performed for EVAL and described earlier, and the permeability of SPEEK containing composite materials is shown in Figure 17. The slope of the coated part of the graph for SPEEK is higher than that for EVAL polymers. It is reflected in the exponent $v$ value of 1.7 for SPEEK versus the value of 0.63-0.66 for the EVAL results. The transition value of the polymer volume fraction is also shifted to a lower value (0.068) in comparison to EVAL containing composite materials (0.12-0.14). These differences can be attributed to the higher hydrophilicity of SPEEK due to the presence of charged groups (sulfonic acid).

Therefore, it appears that in some embodiments, the coatings formed are not dense polymers but are swollen or porous. With lower mass gains, as demonstrated above with various concentrations of EVAL and SPEEK gel polymers, the thickness of the coating increases systematically with mass gain, demonstrating that the thickness of the coating can be controlled. The above results also demonstrated that in some embodiments, the thickness of the coating does not systematically increase beyond a certain mass gain instead undergoes a rapid discontinuous change leading to pore-filled composite materials. Without being bound by theory, it is believed that the origin of this discontinuity could be due to a hydrophobic wall effect at low mass gains which is overcome by dispersive forces at higher mass gains.

<u>Example 30</u>

This example illustrates the preparation of an asymmetrically filled composite material of the present invention having a strong acid functionality.

Sulfonated poly (ether-ether-ketone) (SPEEK) as described in Example was used. A 20wt% solution of SPEEK solution was prepared using N,N'-dimethylformamide as a solvent. The asymmetrically pore filled material was prepared using poly(propylene) PP1545-4 support. A sample of the weighed support member was placed on a poly (ethylene) (PE) sheet and the solution of SPEEK applied to the sample. The sample was subsequently covered with another PE sheet and a rubber roller was run over the sandwich to remove excess solution. The PE sheet covering one of the sides of the membrane was removed and that side of the membrane was placed in contact with water to exchange the solvent and precipitate the polymer on one side of the membrane. An important difference between the method described in this Example and the general method described above is in the method of immersion of the membrane in water so as to obtain asymmetric gel filling. The resulting composite membrane was washed thoroughly with water.

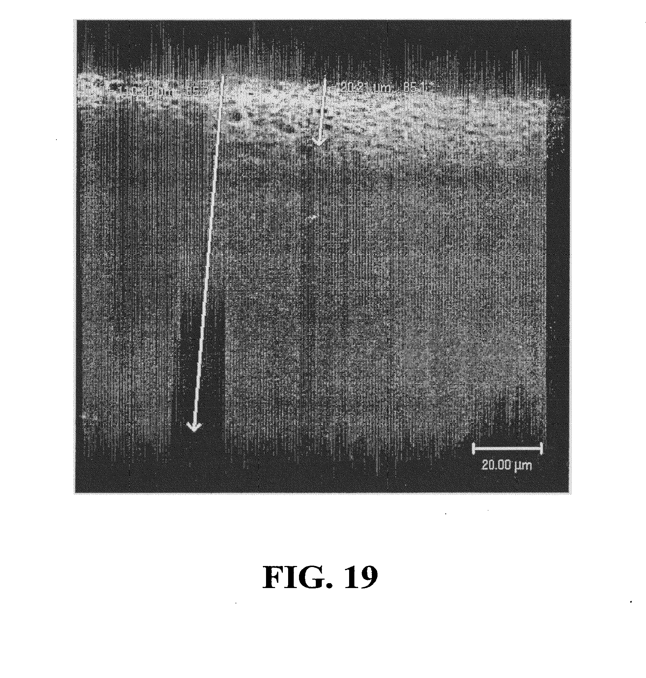

The mass gain of the resulting dried composite material was 76.2% and the water flux was $44.9 \pm 0.3$ kg/m$^2$h at 100 kPa. The incorporated precipitated polymer was treated with a dilute solution of ethidium bromide and the distribution of the precipitated polymer examined by confocal microscopy on a cross-section of the composite material, Fig 19. As can be seen in the figure the precipitated polymer occurs as a layer mostly to the side of the support member contacted with the water. The salt flux and salt rejection with the resulting composite material (precipitated polymer side of the composite material facing the feed solution) (300 ppm NaCl) are presented in Table 20.

Table 20 Data on asymmetrically gel filled SPEEK-composite material

| Pressure (kPa) | Flux (NaCl) (Kg/m$^2$h) | Salt Rejection (%) |
|---|---|---|
| 100 | $43.7 \pm 0.3$ | 34.5 |
| 200 | $85.1 \pm 0.3$ | 35.6 |
| 300 | $117.7 \pm 0.5$ | 38.6 |
| 400 | $150.9 \pm 0.5$ | 35.1 |
| 500 | $179.6 \pm 0.6$ | 33.3 |

A confocal micrograph of a cross-section of the asymmetrically filled composite material is shown in Figure 19.

Example 31

This example describes the preparation of a positively charged coated composite material by co-precipitation of EVAL with a further charged polymer.

A 2.5 wt-% solution was prepared by dissolving EVAL (27 mole % ethylene content) in N,N-dimethylacetamide at 70°C overnight. To 10 g of a 2.5 wt-% EVAL, 1.5385g DADMAC and 0.195g TRIM were added. (TRIM functions as a cross-linker.) A 1w-% IRGACURE as a photoinitiator was introduced to the solution. The microporous poly(propylene) support member was placed on a polyethylene sheet. Thereafter the EVAL solution was spread evenly over it. The substrate was subsequently covered with another polyethylene sheet and the sandwich was run between two rubber rollers to press the polymer solution into the pores and remove excess of solution. The sample was sealed, without allowing any solvent evaporation, and then irradiated under a UV lamp at 365 nm for 1 min. The sample was then treated with water for 30 min to co-precipitate the EVAL and polymerized DADMAC, framed, dried in an oven at 50°C for 30 min and weighed to estimate the mass gain. It was re-wetted for the water flux measurements.

The support member gained $20.1 \pm 0.2$ % of its original weight in this treatment. The composite material was instantly wettable (less than 30 sec) and showed water flux of $9,600 \pm 100$ kg/m$^2$hr at 100kPa.

To quantitatively estimate the charge density of the composite material, a negatively charged dye, metanil yellow, was used as described in Experimental section. The membrane showed a metanil yellow dye binding capacity of 21.6 mg/ml at a flow rate of 7 ml/min. The composite material became orange in colour as it adsorbed the dye.

Example 32

This example describes the preparation of a positively charged coated composite by co-precipitation of EVAL with a further charged polymer.

A 2.5 wt-% solution was prepared by dissolving EVAL (27 mole % ethylene content) in N,N-dimethylacetamide at 70°C overnight. To 10 g of a 2.5 wt-% EVAL, 0.8g DADMAC and 0.125g TRIM were added. TRIM was used as a cross-linker. A 1w-% IRGACURE as a photoinitiator was introduced to the solution. The polymer solution was placed in a sealed small container and irradiated under a UV lamp at 365 nm for 45 sec. The microporous poly(propylene) support member was placed on a polyethylene sheet. Thereafter the pre-irradiated EVAL solution was spread evenly over it.

The substrate was subsequently covered with another polyethylene sheet and the sandwich was run between two rubber rollers to press the polymer solution into the pores and remove excess of solution. Then, the sample was removed and immersed in deionised water for 30 min to precipitate the polymer inside of the porous substrate and allow the unreacted chemicals to diffuse out of the composite material. The sample was then framed, dried in an oven at 50°C for 30 min and weighed to estimate the mass gain and re-wetted for the water flux measurements.

The support member gained 19.5+0.2 % of its original weight in this treatment. The composite material was instantly wettable (less than 30 sec) and showed water flux of $14,800\pm150$ kg/m$^2$hr at 100kPa.

Example 33

This example describes the preparation of a charged coated composite material comprising a modified EVAL.

A 5 wt-% solution of EVAL (27 mole % ethylene content) in N,N-dimethylacetamide was prepared at 70°C overnight. To 40g of a 5 wt-% EVAL, 0.53g acrolein and 1 ml concentrated hydrochloric acid were added and the reaction was allowed to take place at room temperature for 2 hr. Thereafter, the polymer mixture was precipitated in water, washed with water and dried with filter paper and then air dried for 5 hrs. The functionalized EVAL was re-dissolved in DMAc to form an 8 wt-% solution.

To verify the presence of a double bond in the modified EVAL and that it was photocurable a sample was tested to see if it could cross-link when irradiated with a photoinitiator present. To test this, 1g of 8 wt-% modified EVAL was combined with 0.001g Irgacure. The polymer solution was placed in a sealed small vial and irradiated under a UV lamp at 365 nm for 5 min. A transparent gel was obtained indicating that the EVAL had been modified by treatment with acrolein.

Solutions of the modified EVAL was mixed with different charged monomers and a photoinitiator and then introduced into the supporting substrate. Case A 0.2g of diallyldimethylammonium chloride (DADMAC) was added to 2.5g of a 2.5 wt-% functionalized EVAL solution. Case B 0.17g of 2-acrylamido-2-methyl-1-propanesulfonic acid (AMS) was added to the modified EVAL solution. Case C, 0.15g of acrylic acid (AA) was added to the modified EVAL solution. Case D 0.17g 3(methacryloylamino)propyltrimethyl ammonium chloride (MAPTAC) was added to the modified EVAL solution. In each case, a 1w-% IRGACURE as a photoinitiator was introduced to the solution.

A polypropylene substrate was placed between two polyethylene sheets, and the polymer solutions described above were in each case applied. The sample was then run between two rubber rollers to press the solution into the pores of the sample and to remove the excess solution. The sample was sealed, without allowing any solvent evaporation, and then irradiated under an UV lamp at 365 nm. After 1 min of irradiation the sample was removed and immersed in deionised water for 30 min to allow the unreacted chemicals to diffuse out of the composite material. The composite material samples were framed, dried in an oven at 50°C for 30 min, and their weights recorded. The dry samples were re-wetted in water and their fluxes were measured at 100 kPa applied pressure, as described in the Experimental section.

The mass gain and flux for composite materials prepared under cases A, B, C and D are shown in Table 21.

Table 21. Performance of charged coated composite materials

| Membrane | Mass gain (%) | Water flux after drying and rewetting (kg/m$^2$/hr) | Wetting time (min) |
|---|---|---|---|
| A | | $16,500\pm200$ | 1.0 |
| B | $15.5\pm0.2$ | $17,200\pm220$ | 0.5 |
| C | | $16,800\pm210$ | 1.0 |
| D | | $16,900\pm200$ | 1.0 |

Example 34

This example describes the preparation of charged coated composite materials comprising covalently modified EVAL.

EVAL was chemically modified with acrolein as described in Example 33 above. The functionalized EVAL was dissolved in DMAc to form 2.5 wt-% solution. Thereafter, a series of different monomers containing charged groups were added to 2.5g functionalized EVAL solution, Case A, 0.2g of diallyldimethylammonium chloride (DADMAC) was added, Case B 0.11g of 2-acrylamido-2-methyl-1-propanesulfonic acid (AMS) was added, Case C 0.15g of acrylic acid (AA) was added, Case D 0.17g 3(methacryloylamino)propyltrimethyl ammonium chloride (MAPTAC) was added. A 1w-% IRGACURE as a photoinitiator was introduced to the solution. Each of the polymer solutions was placed in a sealed small vial and irradiated under a UV lamp at 365 nm for 45 sec. The polypropylene substrate was placed between two polyethylene sheets, and the pre-irradiated polymer solution described above was applied. The sample was then run between two rubber rollers to press the solution into the pores of the sample and to remove the excess solution. Then, the sample was removed and immersed in deionised water for 30 min to precipitate polymer solution inside of microporous substrate and allow the unreacted chemicals to diffuse out of the composite material. Thereafter, the composite material samples were framed, dried in an oven at 50°C for 30 min, and their weights recorded. The dry samples were re-wetted in water and their fluxes were measured at 100 kPa applied pressure, as described in the Experimental section.

The mass gain and flux for positive composite materials prepared for each of membranes A, B, C and D are shown in Table 22.

Table 22. Performance of single layer charged coated composite materials

| Membrane | Mass gain (%) | Water flux after drying and rewetting (kg/m$^2$/hr) | Wetting time (min) |
|---|---|---|---|
| A | | 13,500±200 | 1.0 |
| B | 15.9±0.2 | 17,100±120 | 3.0 |
| C | | 17,500±210 | 1.5 |
| D | | 17,200±200 | 1.0 |

Example 35

This example illustrates the co-precipitation of EVAL and a positively charged cross-linked polymer formed from DADMAC to form a coating on a support member and how in the absence of the EVAL no coating is formed.

A 2.5 wt-% solution was prepared by dissolving poly(vinyl alcohol-co-ethylene) (EVAL) (27 mole % ethylene content) in N,N-dimethylacetamide (DMAc) at 70°C overnight. The microporous poly(propylene) support member is placed on a polyethylene sheet. Diallyldimethylammonium chloride (DADMAC) was added to the EVAL solution to give a concentration of 2.85 wt-% together with the crosslinker trimethylolpropane tricarylate (TRIM) (10mol.% as compared to the DADMAC) and initiator. The solution was spread evenly over the support membrane. The substrate was subsequently covered with polyethylene sheets and the sandwich run between two rubber rollers to press the polymer solution into the pores and remove excess of solution. The filled substrate was then irradiated in a UV reactor for 5 minutes, and immersed in a water bath for 10 min to co-precipitate the polymers. The membrane had substantial mass gain of 22.2% and a flux of 22,605kg/m$^2$h. The dried membrane wetted rapidly.

Separately, an similar process was carried out using a monomer solution comprising 2.85 wt-% of DADMAC in DMAc and 10 mol-% of TRIM to DADMAC and initiator but no EVAL. After irradiation for the same length of time the filled substrate was immersed in water to precipitate the polymer. This membrane obtained without EVAL showed a mass gain less than 2% and was non-wettable at room temperature. It had a water flux of 24,500kg/m$^2$hr at 100 kPa, the same as the initial membrane.

The results indicate that the co-precipitation of the cross-linked DADMAC in the presence of EVAL leads the formation of a coated membrane. In the absence of EVAL, no coating layer is formed.

Comparative Example 1

An EVAL coated MF membrane was produced by an evaporation procedure described in U.S. Pat. No.5,084,173. A 2.5 wt-% solution was prepared by dissolving poly(ethylene-co-vinylalcohol) (EVAL) (27 mole % ethylene content) in N,N-dimethylacetamide at 70°C overnight. A microporous poly(propylene) support membrane was then placed on a polyethylene sheet and the EVAL solution was spread evenly over it. The substrate was subsequently covered with another polyethylene sheet and the sandwich was run between two rubber rollers to press the polymer solution into the pores and remove excess of solution. The filled substrate was framed and dried in an oven at 60°C for 2 hrs. The coated membrane obtained was characterized in terms of mass gain, water flux, critical flux and wettability (Table 23). As can be seen from the table, the obtained membrane was not wettable with water. Indeed, in order to measure water flux through the membrane, acetone had to be used to wet the membrane.

In contrast, porous membranes having an EVAL coat layer formed by precipitation in aqueous media were readily wetted with water even after extensive drying, as seen in Table 23. For the precipitated membrane, the same procedure as described above for an evaporation membrane was followed, but instead of drying, the filled substrate was immersed vertically into a water bath for 30 min to precipitate the EVAL.

Table 23 Performance of EVAL-coated membranes obtained by precipitation and evaporation routes

| Method | Mass Gain (%) | Water Flux (kg/m$^2$ hr) at 100kPa | Critical Flux (kg/m$^2$hr) | Wettability (sec) |
|---|---|---|---|---|
| A: EVAL coating by precipitation route | 16.5$\pm$0.1 | 16,500$\pm$100 | 39.0 | 3.0 |
| B: EVAL coating by evaporation route | 16.7$\pm$0.1 | 16,700$\pm$100* | 24.0 | Non-wettability |
| * membrane was pre-wetted with acetone for this measurement | | | | |

The critical flux measurements were carried out using a cross-flow cell with bentonite as the foulant. The higher the value of the critical flux, the better the performance of the membrane.

It will be noted that the mass gains (amount of incorporated EVAL) and water fluxes of membranes produced by the two routes are substantially identical. They differ only in wettability and fouling propensity (critical flux).

Comparative Example 2

This comparative example compares neutral coated membranes prepared by precipitation or evaporation.

A 2.5 wt-% solution was prepared by dissolving poly(vinyl alcohol-co-ethylene) (EVAL) (27 mole % ethylene content) in N,N-dimethylacetamide at 70°C overnight. The microporous poly(propylene) support member was placed on a polyethylene sheet. Thereafter the EVAL solution was spread evenly over it. The substrate was subsequently covered with another polyethylene sheet and the sandwich was run between two rubber rollers to press the polymer solution into the pores and remove excess of solution. The filled substrate was then treated in one of two ways. In one method the filled substrate was immersed to the water bath for 10 min to precipitate the polymer. Thereafter the composite material was framed and dried at room temperature and then in an oven at 50°C for 30 min. Alternatively, the liners were removed from the filled substrate; it was then framed and dried in an oven at 60°C for 2 hrs.

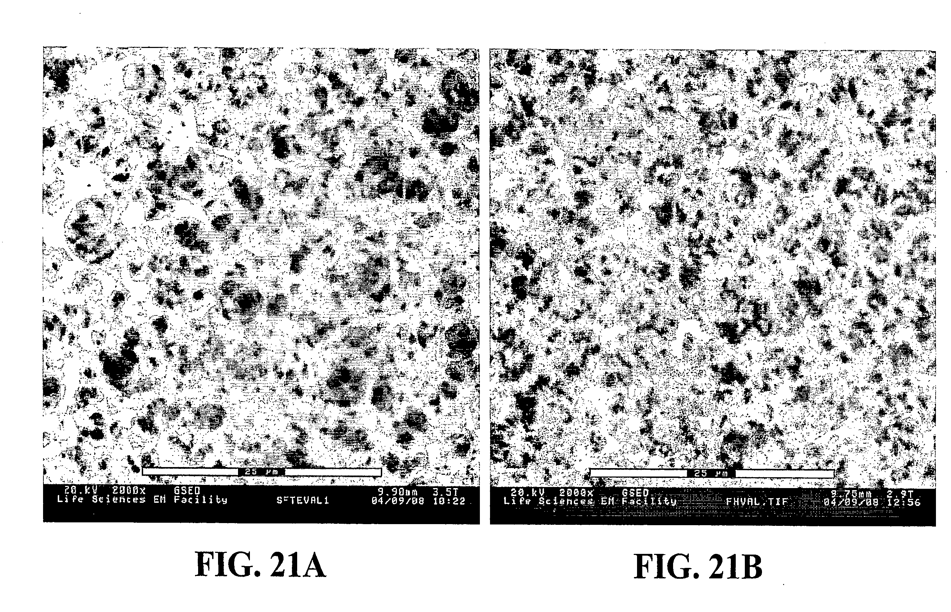

The composite material obtained from the precipitation route was wettable at room temperature in 5 min and showed a mass gain of 15.5$\pm$0.1%, a water flux of 16,500$\pm$100 kg/m$^2$hr at 100 kPa and a critical flux of 39kg/m$^2$h. An ESEM image of the composite material is shown in Fig.21(A)

The membrane obtained by the evaporation route was not wettable in water at room temperature. It had a mass gain of 16.5$\pm$0.1%, a water flux of 16,700$\pm$100 kg/m$^2$hr at 100 kPa after the sample was pre-wetted with acetone and a critical flux of 24kg/m$^2$h. An ESEM image of the composite material is shown in Fig.21(B). As can be seen from Figures 21(A) and 21(B), the coated membranes prepared by precipitation and evaporation routes have similar morphological porous structure as the base substrate membrane indicating that coating has occurred.

Surface chemical analyses of the membranes were carried out using X-ray photoelectron spectroscopy (XPS), also known as Electron Spectroscopy for Chemical Analysis (ESCA). This is a surface sensitive technique which can provide elemental composition and chemical bonding information of the outermost 30 to 100 A of a sample surface. The ESCA spectra were obtained on a Kratos Axis Ultra. The results of these analyses are given in Table 24. Table 24 also provides for similar measurements carried out on composite materials comprising 5 wt% EVAL.

Table 24. ESCA analysis of the EVAL membrane surfaces

| Method | Oxygen content, % | | Carbon content, % | |
|---|---|---|---|---|
| | Textured side* | Flat side | Textured side | Flat side |
| 2.5wt% EVAL coating by precipitation route | 13 | 11 | 87 | 89 |
| 2.5wt% EVAL coating by evaporation route | 5.3 | 3.9 | 95 | 96 |
| 5.0wt% EVAL coating by precipitation route | 17 | 17 | 83 | 83 |
| 5.0wt% EVAL coating by evaporation route | 9.6 | 6.9 | 90 | 93 |
| *The substrate has two faces: one textured side and one flat side | | | | |

The results given in Table 24 indicate that the oxygen content on the surface of EVAL membrane depends on the method the membrane was formed. The membrane obtained by the precipitation route of this invention showed significantly higher oxygen content compare to membranes produced by the evaporation route. Without wishing to be bound by theory, it is believed that the enhanced oxygen contents of the membranes produced by evaporation result in these membranes being instantly wettable while membranes produced by evaporation routes are non-wettable. The critical fluxes of the two different types of membranes in the cross-flow microfiltration of bentonite suspensions also differ substantially, with the membrane produced by evaporation having a much higher critical flux (bentonite) value of 39 kg/m$^2$h compared to 24 kg/m$^2$h for the evaporated membrane.

Comparative Example 3

This comparative example shows the effect of the nature of the substrate on coated membranes performance formed by either precipitation or evaporation routes.

The membranes were prepared as described in Comparative Example 2 above. As substrate, PP, PTFE, PE 954-8B and PE 690-6A were used. A sample of EVAL with an ethylene content of 27 mole % was used. A 2.5 wt-% solution was prepared by dissolving EVAL in N,N-dimethylacetamide at 70°C overnight.

Membranes obtained were tested for wettability, mass gain and water flux at 100 kPa. Experimental data are presented in Table 25. As can be seen data in the Table, the solvent evaporation method is effective only in one case in which a very high loading of EVAL was used. The later can be attributed to the effect of high mass gain. The EVAL precipitation route gives porous materials with excellent wetting properties in every case.

Table 25. Effect of nature of substrate on composite material properties obtained by evaporation route

| Substrate | Method | Mass gain (%) | Water Flux (kg/m$^2$ hr) at 100 kPa | Wettability at room temperature (min) |
|---|---|---|---|---|
| PP | Evaporation | 15.5±0.1 | 17,700±100 | Non-wettable |
| | Precipitation | 17.5±0.1 | 16,500±100 | instant |
| PTFE | Evaporation | 11.2±0.1 | 740±10 | 35 |
| | Precipitation | 16.4±0.2 | 1,540±20 | 0.2 |
| PE 954-8B | Evaporation | 58.5±0.5 | 110±5 | instant |
| | Precipitation | 62.9+0.1 | 850±10 | instant |
| PE 690-6A | Evaporation | 14.3±0.1 | 22,000±200 | Non-wettable |
| | Precipitation | 13.9±0.1 | 15,800±120 | 0.15 |
| Comparative Example 4 | | | | |

This example describes effect of EVAL solution concentration on the properties of coated composite material obtained by either precipitation or evaporation routes.

The composite material was prepared by precipitation and evaporation routes as described in Comparative Example 1. EVAL with ethylene content 27 mole % was used. EVAL solutions with variable concentration from 2.0 wt-% to 20.0 wt-% were prepared by dissolving EVAL. in N,N-dimethylacetamide at 70°C overnight.

Composite materials obtained were tested for wettability, mass gain and water flux at 100 kPa. Experimental data are presented in Table 26.

Table 26. Effect of concentration of EVAL solution on properties composite material prepared by precipitation route

| EVAL conc.(%) | Route | Mass gain (%) | Water Flux (kg/m$^2$ hr) | Wettability (25°C) (sec) |
|---|---|---|---|---|
| 2.0 | Precipitation | 11 | 24,600±200 | 15 |
| | Evaporation | 13 | 22,400±200 | non-wettable |
| 2.5 | Precipitation | 18 | 23,600±150 | 3 |
| | Evaporation | 19 | 22,200±200 | non-wettable |
| 5.0 | Precipitation | 36 | 16,700±130 | 1 |
| | Evaporation | 29 | 22,700±200 | non-wettable |
| 7.5 | Precipitation | 50 | 10,600±100 | 1 |
| | Evaporation | 50 | 20,900±200 | non-wettable |
| 10 | Precipitation | 70 | 6,400±50 | 1 |

(continued)

| EVAL conc.(%) | Route | Mass gain (%) | Water Flux (kg/m$^2$ hr) | Wettability (25°C) (sec) |
|---|---|---|---|---|
| | Evaporation | 71 | 17,700±150 | 3600 |
| 12.5 | Precipitation | 139 | 2,730±30 | 1 |
| | Evaporation | 124 | 7,300±60 | 1200 |
| 15 | Precipitation | 160 | 900±10 | 1 |
| | Evaporation | 164 | 5,800±50 | 900 |
| 20 | Precipitation | 229 | 8±0.1 | 1 |
| | Evaporation* | 431 | 0.12±0.1 | - |

*This membrane was transparent. The absence of light scattering and the low flux show that this membrane had a continuous gel-filled nature.

It can be seen from this data that membranes made using the precipitation route are more hydrophilic and ready wet when immersed in water.

It must be noted that as used in this specification and the appended claims, the singular forms "a", "an", and "the" include plural reference unless the context clearly dictates otherwise. Unless defined otherwise all technical and scientific terms used herein have the same meaning as commonly understood to one of ordinary skill in the art to which this invention belongs.

## Claims

1. A process for preparing a filtration membrane, the process comprising:

    (a) applying to a porous support member a solution comprising a first solvent and a polymer that is substantially soluble in said first solvent, the first solvent being miscible in a second solvent in which second solvent the polymer is substantially insoluble but swellable, such that the polymer enters the pores of the support member; and
    (b) contacting said polymer with said second solvent to precipitate said polymer from said solution to form a precipitated non-crosslinked gel polymer that fills or coats the pores of the support member.

2. A process according to claim 1, wherein the gel polymer is substantially water-insoluble but water swellable.

3. A process according to claim 1 or 2, wherein the gel polymer is a cellulose derivative, a polyester, a polyamide, a polyacrylate, a poly(ethylene-co-vinyl alcohol) (EVAL), a poly(ethylene-co-allyl alcohol), a partially charged polymer, a copolymer of neutral and charged monomers or a random copolymer of hydrophilic and hydrophobic monomers.

4. A process according to claim 1, wherein the gel polymer is substantially insoluble, but swellable, in an organic solvent.

5. A process according to any one of claims 1 to 4, wherein the pores of the support member are coated with the gel polymer.

6. A process according to any one of claims 1 to 4, wherein the pores of the support member are filled with the gel polymer.

7. A process according to any one of claims 1 to 6, wherein the support member is in the form of a flat sheet, a spiral wound sheet, a hollow fibre, or a tubular membrane.

## Patentansprüche

1. Vorgang zum Vorbereiten einer Filtrationsmembran, wobei das Verfahren Folgendes umfasst:

    (a) Aufbringen einer Lösung, umfassend ein erstes Lösungsmittel und ein Polymer, das in dem ersten Lösungsmittel im Wesentlichen lösbar ist, auf ein poröses Trägerelement, wobei das erste Lösungsmittel in einem zweiten Lösungsmittel mischbar ist, wobei das Polymer in dem zweiten Lösungsmittel im Wesentlichen nicht lösbar, aber quellbar ist, sodass das Polymer in die Poren des Trägerelements eindringt; und

(b) In-Berührung-Bringen des Polymers mit dem zweiten Lösungsmittel, um das Polymer aus der Lösung auszufällen, um ein ausgefälltes, nicht vernetztes Gelpolymer auszubilden, das die Poren des Trägerelements ausfüllt oder beschichtet.

**2.** Vorgang nach Anspruch 1, wobei das Gelpolymer im Wesentlichen nicht wasserlöslich, aber wasserquellbar ist.

**3.** Vorgang nach Anspruch 1 oder 2, wobei das Gelpolymer ein Cellulosederivat, ein Polyester, ein Polyamid, ein Polyacrylat, ein Poly(ethylen-co-vinylalkohol) (EVAL), ein Poly(ethylen-co-allylalkohol), ein teilweise geladenes Polymer, ein Copolymer aus neutralen und geladenen Monomeren oder ein Random-Copolymer aus hydrophilen und hydrophoben Monomeren ist.

**4.** Vorgang nach Anspruch 1, wobei das Gelpolymer in einem organischen Lösungsmittel im Wesentlichen unlöslich, aber quellbar ist.

**5.** Vorgang nach einem der Ansprüche 1 bis 4, wobei die Poren des Trägerelements mit dem Gelpolymer beschichtet werden.

**6.** Vorgang nach einem der Ansprüche 1 bis 4, wobei die Poren des Trägerelements mit dem Gelpolymer gefüllt werden.

**7.** Vorgang nach einem der Ansprüche 1 bis 6, wobei das Trägerelement in Form einer flachen Platte, einer spiralgewundenen Platte, einer hohlen Faser oder einer röhrenförmigen Membran vorliegt.


**Revendications**

**1.** Procédé de préparation d'une membrane filtrante, le procédé comprenant les étapes consistant à :

(a) appliquer sur un élément de support poreux une solution comprenant un premier solvant et un polymère sensiblement soluble dans ledit premier solvant, le premier solvant étant miscible dans un deuxième solvant, dans lequel le deuxième solvant, le polymère, est sensiblement insoluble mais capable de gonfler, de sorte que le polymère pénètre dans les pores de l'élément de support ; et

(b) mettre en contact ledit polymère avec ledit deuxième solvant pour précipiter ledit polymère à partir de ladite solution afin de former un polymère gélifié non réticulé précipité qui remplit ou recouvre les pores de l'élément de support.

**2.** Procédé selon la revendication 1, dans lequel le polymère gélifié est sensiblement insoluble dans l'eau mais capable de gonfler dans l'eau.

**3.** Procédé selon la revendication 1 ou 2, dans lequel le polymère gélifié est un dérivé de la cellulose, un polyester, un polyamide, un polyacrylate, un poly(éthylène-alcool vinylique) (EVAL), un poly(éthylène-alcool allylique), un polymère partiellement chargé, un copolymère de monomères neutres et chargés ou un copolymère aléatoire de monomères hydrophiles et hydrophobes.

**4.** Procédé selon la revendication 1, dans lequel le polymère gélifié est sensiblement insoluble mais capable de gonfler dans un solvant organique.

**5.** Procédé selon l'une quelconque des revendications 1 à 4, dans lequel les pores de l'élément de support sont recouverts du polymère gélifié.

**6.** Procédé selon l'une quelconque des revendications 1 à 4, dans lequel les pores de l'élément de support sont remplis avec le polymère gélifié.

**7.** Procédé selon l'une quelconque des revendications 1 à 6, dans lequel l'élément de support est sous la forme d'une feuille plane, d'une feuille spiralée, d'une fibre creuse ou d'une membrane tubulaire.

**FIG. 1**

**FIG. 2**

cross-section

**FIG. 3**

**FIG. 4**

**FIG. 5**

FIG. 6A

FIG. 6B

**FIG. 7**

**FIG. 8**

FIG. 9

**FIG. 10**

**FIG. 11**

Effect of Coating Layer Thickness on Flux at 100 kPa

FIG. 12

Effect of Eval Concentration on Flux at 100 kPa

FIG. 13

Theoretical Mass Gain as a Function of Coating Layer
Thickness

FIG. 14

Permeability of Eval Treated Membranes

FIG. 15

FIG. 16

## Permeability of SPEEK Treated Membranes

**FIG. 17**

**FIG. 18**

**FIG. 19**

**FIG. 20B**

**FIG. 20A**

**FIG. 21B**

**FIG. 21A**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6258276 B, Mika
- JP 2002233739 B
- US 5084 A
- US 173 A
- EP 0498414 A
- US 4515906 A
- US 4335017 A
- US 5084173 A
- EP 0498414 A2
- WO 03008011 A1

### Non-patent literature cited in the description

- **NYSTROM M. et al.** *Journal of Membrane Science,* 1991, vol. 60, 275-296
- **RABELO, D. ; COUTINHO, F. M. B.** *Polym. Bull.,* 1994, vol. 33, 479
- **RABELO, D. ; COUTINHO, F. M. B.** *Polym. Bull.,* 1994, vol. 33, 487
- **RABELO, D. ; COUTINHO, F. M. B.** *Polym. Bull.,* 1994, vol. 33, 493
- **BARTON A. F. M.** CRC Handbook of Solubility Parameters and Other Cohesion Parameters. CRC Press, 1983
- **GRULKE, E. A.** Polymer Handbook. Wiley-Interscience, 1999, 675
- **VAN KREVELEN. D. W.** Properties of Polymers. Elsevier, 1976, 129
- **DURCHSCHLAG,H. ; ZIPPER,P.** Calculation of the partial volume of organic compounds and polymers. *Progress in Colloid and Polymer Science,* 1994, vol. 94, 20-39
- **KAPUR,V. ; CHARKOUDIAN,J. ; KESSLER,S.B. ; ANDERSON, J.L.** Hydrodynamic permeability of hydrogels stabilized within porous membranes. *Industrial and Engineering Chemistry Research,* 1996, vol. 35, 3179-3185
- **MIKA, A.M. ; CHILDS, R.F.** Calculation of the hydrodynamic permeability of gels and gel-filled microporous membranes. *Industrial and Engineering Chemistry Research,* 2001, vol. 40, 1694-1705